# EUROPÄISCHE PATENTSCHRIFT

(11) **EP 3 781 889 B1**
(45) Veröffentlichungstag und Bekanntmachung des Hinweises auf die Patenterteilung: **28.08.2024**
(21) Anmeldenummer: 19718624.0
(22) Anmeldetag: 11.04.2019
(51) Int. Cl.: F28D 21/00, F24D 17/00, E03F 3/04, F28D 1/03, E03C 1/00, F28F 9/26

(54) **WÄRMETAUSCHERELEMENT, WÄRMETAUSCHERMODUL UND WÄRMETAUSCHERSYSTEM**
HEAT EXCHANGER ELEMENT, HEAT EXCHANGER MODULE AND HEAT EXCHANGER SYSTEM
ÉCHANGEUR DE CHALEUR, MODULE DE ÉCHANGEUR DE CHALEUR ET SYSTÈME DE ÉCHANGEUR DE CHALEUR

(30) Priorität: 19.04.2018 DE 102018003689
(43) Veröffentlichungstag der Anmeldung: 24.02.2021
(73) Patentinhaber: Uhrig Energie GmbH, 78187 Geisingen (DE)
(72) Erfinder: UHRIG, Thomas, 78187 Geisingen (DE)
(74) Vertreter: Müller-Boré & Partner Patentanwälte PartG mbB
(86) Internationale Anmeldenummer: PCT/EP2019/059184
(87) Internationale Veröffentlichungsnummer: WO 2019/201720

(56) Entgegenhaltungen:
- EP-A1- 1 815 073
- EP-A1- 2 729 752
- EP-A1- 3 088 618
- EP-A1- 3 180 479
- DE-A1- 102012 213 306
- JP-A- 2013 040 469
- KR-A- 20100 098 912

## Beschreibung

Die Erfindung betrifft ein Wärmetauscherelement, ein Wärmetauschermodul mit einem oder mehreren Wärmetauscherelementen und ein Wärmetauschersystem mit mehreren Wärmetauschermodulen zum insbesondere nachträglichen Einbau in eine Abwasserrohrleitung.

Energiegewinnung aus Abwasser durch nachträglich in die Abwasserrohrleitung eingebaute Wärmetauscherelemente ist beispielsweise aus der DE 10 2005 048 689 A1 bekannt.

Bekannte Wärmetauscherelemente müssen allerdings üblicherweise je nach Rohrleitungsquerschnitt, für den sie vorgesehen sind, individuell angefertigt werden. Auch ein Einbringen in die Rohrleitung ist bei den bekannten Wärmetauscherelementen wegen ihrer Größe schwierig.

Die EP 1 815 073 A1 offenbart einen Absorber für ein Rohr- oder Kanalbauwerk mit wenigstens einem Vorlaufanschluss und wenigstens einem Rücklaufanschluss und einem oder mehreren, einen Vorlauf mit einem Rücklauf verbindenden Absorberkanälen. Die Absorberkanäle des Absorbers sind in einer Absorberkanalmatte zusammengefasst und bilden eine gegenständliche Einheit, wobei die Absorberkanalmatte aus einem Material mit zumindest während seiner Verlegung im Rohr- oder im Kanalbauwerk flexiblen Eigenschaften besteht.

Des Weiteren offenbaren die EP 3 088 618 A1, KR 2010 0098912 A, EP 2 729 752 A1, DE 10 2012 213 306 A1, JP 2013 040469 A und die EP 3 180 479 A1 eine Vorrichtung zur Nutzung der Wärme von Abwasser in einem Abwasserkanal.

Es ist eine Aufgabe der vorliegenden Erfindung, ein Wärmetauscherelement, ein Wärmetauschermodul und ein Wärmetauschersystem mit einem oder mehreren Wärmetauscherelementen bereitzustellen, bei denen die Herstellung weitgehend standardisiert und/oder das Einbringen in eine Rohrleitung vereinfacht ist.

Die Aufgabe wird durch den Gegenstand des jeweiligen unabhängigen Patentanspruchs gelöst.

Ein Aspekt betrifft ein Wärmetauscherelement insbesondere zum Einbringen in eine sich entlang einer Längsrichtung erstreckende Abwasserrohrleitung, mit einer Wärmetauscherkammer zur Aufnahme eines Wärmetauscherfluids, die einen Oberschalenabschnitt und einen davon beabstandeten Unterschalenabschnitt aufweist. Eine Außenseite des Oberschalenabschnitts ist dafür ausgelegt, zumindest abschnittsweise mit Abwasser in Kontakt zu kommen, um Wärme von dem Abwasser aufzunehmen oder Wärme an das Abwasser abzugeben. Weiter ist eine Innenseite des Oberschalenabschnitts dafür ausgelegt, zumindest abschnittsweise mit dem Wärmetauscherfluid in Kontakt zu kommen, um die Wärme an das Wärmetauscherfluid abzugeben. Ein Einlauf der Wärmetauscherkammer ist wahlweise mit einem Ausgang eines Vorlaufleitungsabschnitts oder mit einem Auslauf der Wärmetauscherkammer eines weiteren Wärmetauscherelements fluidisch verbindbar und ein Auslauf der Wärmetauscherkammer ist wahlweise mit einem Eingang eines Rücklaufleitungsabschnitts oder mit einem Einlauf der Wärmetauscherkammer eines weiteren Wärmetauscherelements fluidisch verbindbar.

Es ist ein Vorteil der vorliegenden Erfindung, dass das beschriebene Wärmetauscherelement unter Verwendung von weitgehend standardisierten, d.h. mit nur wenig voneinander abweichend ausgebildeten Wärmetauscherelementen - insbesondere in Breitenrichtung - aneinanderreihbar, fluidisch verbindbar und somit erweiterbar ist.

Beispielsweise kann das Wärmetauscherelement zur Wärmerückgewinnung aus Kühlwasser von Kraftwerksanlagen, zur Speicherung von Solarenergie in Warmwasserpuffern oder auch zur Wärmerückgewinnung aus Abwärme - insbesondere aus Abwasser - von Gebäuden, Maschinen oder sonstigen Anlagen eingesetzt werden.

Alternativ oder zusätzlich zu dem oben Beschriebenen kann das Wärmetauscherelement zumindest abschnittsweise von Luft oder einem Gas bzw. Gasgemisch umströmt werden.

Eine Längsrichtung ist eine Richtung in einer Erstreckung einer Länge eines Bauteils. Bei beispielsweise einem flächig oder schalenförmig ausgebildeten Wärmetauscherelement ist die Längsrichtung bei einer bevorzugten Längseinbaulage des Wärmetauscherelements etwa parallel zu dessen längerer Seite ausgerichtet. Insbesondere ist die Längsrichtung dabei etwa parallel zu einer Durchströmungsrichtung der Verbindungsrohre ausgerichtet bzw. entgegen einer Hauptdurchströmungsrichtung des Wärmetauscherfluids in der Wärmetauscherkammer. In Bezug auf eine Abwasserrohrleitung, in der das Wärmetauscherelement zum Einsatz kommen kann, ist die Längsrichtung etwa parallel zu einer Ausbreitungsrichtung der Abwasserrohrleitung bzw. in Fließrichtung des Abwassers in der Abwasserrohrleitung ausgerichtet. Bei einer alternativen Quereinbaulage des Wärmetauscherelements ist die Längsrichtung etwa parallel zu der kürzeren Seite des Wärmetauscherelements ausgerichtet. Es versteht sich, dass für die bevorzugte Längseinbaulage geprägte Begriffe für Richtungen wie Vorlaufseite, Rücklaufseite, stromauf oder stromab bei der alternativen Quereinbaulage gegebenenfalls angepasst werden sollten. Aus Gründen der besseren Übersicht wurden aber diese Begriffe nicht angepasst und konsistent für die betreffenden Teile bzw. Merkmale unabhängig von der Einbaulage verwendet.

Eine Breitenrichtung ist senkrecht zu der Längsrichtung ausgerichtet. Bei beispielsweise einem flächig oder schalenförmig ausgebildeten Wärmetauscherelement ist die Breitenrichtung bei der bevorzugten Längseinbaulage des Wärmetauscherelements etwa parallel zu dessen kürzerer Seite ausgerichtet. Insbesondere ist die Breitenrichtung dabei etwa parallel zu einer Richtung, die von der Vorlaufseite zu der Rücklaufseite zeigt. Bei der alternativen Quereinbaulage des Wärmetauscherelements ist die Breitenrichtung etwa parallel zu der längeren Seite des Wärmetauscherelements ausgerichtet. In Bezug auf die Abwasserrohrleitung, in der das Wärmetauscherelement zum Einsatz kommen kann, ist die Breitenrichtung dann etwa quer zur Ausbreitungsrichtung der Abwasserrohrleitung bzw. quer zur Fließrichtung des Abwassers in der Abwasserrohrleitung ausgerichtet.

Die Hauptdurchströmungsrichtung des Wärmetauscherfluids in der Wärmetauscherkammer ist unabhängig von der Einbaulage des Wärmetauscherelements etwa parallel zu der längeren Seite der Wärmetauscherkammer ausgerichtet. Bei der bevorzugten Längseinbaulage des Wärmetauscherelements ist die Hauptdurchströmungsrichtung etwa in Längsrichtung ausgerichtet. In Bezug auf die Abwasserrohrleitung, in der das Wärmetauscherelement zum Einsatz kommen kann, ist die Hauptdurchströmungsrichtung etwa parallel zur Fließrichtung des Abwassers in der Abwasserrohrleitung ausgerichtet. Bei der alternativen Quereinbaulage des Wärmetauscherelements ist die Hauptdurchströmungsrichtung etwa in Breitenrichtung ausgerichtet. In Bezug auf die Abwasserrohrleitung, in der das Wärmetauscherelement zum Einsatz kommen kann, ist die Hauptdurchströmungsrichtung etwa quer zur Ausbreitungsrichtung der Abwasserrohrleitung bzw. quer zur Fließrichtung des Abwassers in der Abwasserrohrleitung ausgerichtet.

Eine Abwasserrohrleitung ist eine Rohrleitung zum Sammeln und Leiten von Abwasser, wobei eine Abwasserfließrichtung parallel zu der Längsrichtung der Abwasserrohrleitung verläuft bzw. mit dieser zusammenfällt. Die Abwasserfließrichtung ist in der Regel durch ein Gefälle der Abwasserrohrleitung festgelegt und verläuft grundsätzlich parallel zu der oben beschriebenen Längsrichtung bzw. fällt mit ihr zusammen. Eine Abwasserrohrleitung kann im Sinne der vorliegenden Erfindung auch eine offene Abwasserrinne sein.

Die Begriffe "stromauf" und "stromab" und dergleichen sind im Rahmen dieser Beschreibung in Bezug auf die Abwasserfließrichtung zu verstehen.

Eine Wärmetauscherkammer dient dem Wärmeübergang von einem Medium außerhalb der Wärmetauscherkammer, das zumindest einen Wandabschnitt der Wärmetauscherkammer kontaktiert, zu einem in der Wärmetauscherkammer befindlichen bzw. die Wärmetauscherkammer durchströmenden Wärmetauscherfluid. Dabei ist eine hohe Wärmeleitfähigkeit des betreffenden Wandabschnitts und des Wärmetauscherfluids von Vorteil. Die Wärmetauscherkammer ist fluiddicht und insbesondere druckdicht ausgebildet, unabhängig davon, ob sie einstückig ausgebildet ist oder mehrere eigenständige fluidisch miteinander verbundene Bauteile aufweist.

Ein Oberschalenabschnitt der Wärmetauscherkammer ist insbesondere ein in Einbaulage der Wärmetauscherkammer oberer Bereich der Oberfläche der Wärmetauscherkammer, der hauptsächlich mit dem Abwasser in Berührung kommt. Vorteilhafterweise weist die Oberschale eine hohe Wärmeleitfähigkeit auf und weist eine erhöhte Beständigkeit gegenüber Korrosion und/oder Abrasion auf. Der Oberschalenabschnitt kann sich über den gesamten oberen Bereich der Oberfläche der Wärmetauscherkammer erstrecken. Der Oberschalenabschnitt kann einstückig mit der übrigen Wandung der Wärmetauscherkammer ausgebildet oder als eigenständiges Bauteil ausgebildet sein, das fluidisch mit der übrigen Wandung der Wärmetauscherkammer verbunden ist. Der Oberschalenabschnitt begrenzt die Wärmetauscherkammer nach oben hin.

Ein Unterschalenabschnitt der Wärmetauscherkammer ist insbesondere ein in Einbaulage der Wärmetauscherkammer unterer Bereich der Oberfläche der Wärmetauscherkammer, der die Wärmetauscherkammer nach unten hin begrenzt. Der Unterschalenabschnitt kann ebenfalls mit dem Abwasser in Berührung kommen und deswegen ebenfalls vorteilhafterweise eine hohe Wärmeleitfähigkeit und eine erhöhte Beständigkeit gegenüber Korrosion und/oder Abrasion aufweisen. Der Unterschalenabschnitt kann sich über den gesamten unteren Bereich der Oberfläche der Wärmetauscherkammer erstrecken. Der Unterschalenabschnitt kann einstückig mit der übrigen Wandung der Wärmetauscherkammer ausgebildet oder als eigenständiges Bauteil ausgebildet sein, das fluidisch mit der übrigen Wandung der Wärmetauscherkammer verbunden ist.

Als Vorlauf ist im Rahmen der vorliegenden Erfindung ein Bereich der Zufuhr von kälterem Wärmetauscherfluid zu dem Wärmetauscherelement bezeichnet. Die verwendeten Begriffe "Vorlaufseite" sowie "vorlaufseitig" bezeichnen einen Abschnitt, der im Bereich des Vorlaufs liegt oder eine Richtung, die in Richtung des Vorlaufs zeigt.

Als Rücklauf ist ein Bereich der Abfuhr von erwärmtem Wärmetauscherfluid bezeichnet. Die verwendeten Begriffe "Rücklaufseite" sowie "rücklaufseitig" bezeichnen einen Abschnitt, der im Bereich des Rücklaufs liegt oder eine Richtung, die in Richtung des Rücklaufs zeigt. Üblicherweise wird der Kreislauf des Wärmetauscherfluids mittels einer Pumpe erzeugt, die das Wärmetauscherfluid vom Vorlauf über das Wärmetauscherelement zum Rücklauf fördert. An geeigneter Stelle im Rücklauf ist üblicherweise eine Wärmetauschereinrichtung vorgesehen, mittels der die zu ihr transportierte Wärme genutzt und/oder gespeichert wird.

Ein Wärmetauscherfluid dient zum Transport der Wärme, die aus dem Medium außerhalb der Wärmetauscherkammer auf das Wärmetauscherfluid übertragen wurde. Als Wärmetauscherfluid werden üblicherweise z.B. Wasser, Öle oder Emulsionen verwendet.

Als Fluidverbindung oder fluidisch verbunden ist im Rahmen der Erfindung eine Verbindung zweier Bauteile oder ein Anschluss eines Bauteils an einem anderen Bauteil bezeichnet, die in Bezug auf das in den Bauteilen befindliche Fluid dicht miteinander verbunden bzw. aneinander angeschlossen sind, um das Fluid verlustfrei in den verbundenen Bauteilen aufzunehmen bzw. von einem Bauteil zum anderen zu leiten. Insbesondere bei Einsatz einer Pumpe zum Fördern des Fluides und/oder bei Erwärmung des Fluides ist mit Fluidverbindung oder fluidisch verbunden auch eine druckdichte Verbindung bzw. ein druckdichter Anschluss bezeichnet, die bzw. der einem zu erwartenden Druck mit Sicherheit standhält.

Die verwendeten Begriffe "oben" oder "oberhalb" und dergleichen bedeuten im Sinne der vorliegenden Erfindung eine Richtung und/oder eine Lage eines Elements in Bezug auf ein anderes Element entgegen der Schwerkraftrichtung. Die verwendeten Begriffe "unten" oder "unterhalb" und dergleichen bedeuten im Sinne der vorliegenden Erfindung eine Richtung und/oder eine Lage eines Elements in Bezug auf ein anderes Element in der Schwerkraftrichtung.

Einbringen im Sinne der Erfindung umfasst sowohl das nachträgliche Einbringen des Wärmetauscherelements, Wärmetauschermoduls oder des Wärmetauschersystems entlang der Längsrichtung in eine bestehende Abwasserrohrleitung als auch das Herstellen bzw. Ausbilden einer Abwasserrohrleitung bzw. eines Abwasserrohrleitungselements einschließlich des Wärmetauscherelements, Wärmetauschermoduls bzw. des Wärmetauschersystems.

Wie oben schon erwähnt, kann auch eine Außenseite des Unterschalenabschnitts der Wärmetauscherkammer dafür ausgelegt sein, zumindest abschnittsweise mit Abwasser in Kontakt zu kommen, um Wärme von dem Abwasser aufzunehmen. Weiter kann eine Innenseite des Unterschalenabschnitts dafür ausgelegt sein, zumindest abschnittsweise mit dem Wärmetauscherfluid in Kontakt zu kommen, um die Wärme an das Wärmetauscherfluid abzugeben.

Das Wärmetauscherelement enthält ein vorlaufseitiges Verbindungsrohr, das vorlaufseitig an der Wärmetauscherkammer, insbesondere entlang einer vorlaufseitigen Längsseite, vorgesehen ist und dessen Auslauf mit dem Einlauf der Wärmetauscherkammer fluidisch verbunden ist. Weiter enthält das Wärmetauscherelement ein rücklaufseitiges Verbindungsrohr, das rücklaufseitig an der Wärmetauscherkammer, insbesondere entlang einer rücklaufseitigen Längsseite, vorgesehen ist und dessen Einlauf mit dem Auslauf der Wärmetauscherkammer fluidisch verbunden ist.

Es ist ein weiterer Vorteil der vorliegenden Erfindung, dass das Wärmetauscherelement mittels der beschriebenen Konfiguration unter Verwendung von Gleichteilen, also identisch ausgebildeten Wärmetauscherelementen, in Breitenrichtung aneinanderreihbar, fluidisch verbindbar und somit erweiterbar ist.

Eine Eintrittsöffnung des vorlaufseitigen Verbindungsrohrs ist mit dem Ausgang eines Vorlaufleitungsabschnitts oder mit der Austrittsöffnung des rücklaufseitigen Verbindungsrohrs des weiteren Wärmetauscherelements fluidisch verbindbar und eine Austrittsöffnung des rücklaufseitigen Verbindungsrohrs ist mit dem Eingang eines Rücklaufleitungsabschnitts oder mit der Eintrittsöffnung des vorlaufseitigen Verbindungsrohrs des weiteren Wärmetauscherelements fluidisch verbindbar.

Die Eintrittsöffnung des vorlaufseitigen Verbindungsrohrs sind mit der Austrittsöffnung des rücklaufseitigen Verbindungsrohrs eines weiteren Wärmetauscherelements und/oder die Austrittsöffnung des rücklaufseitigen Verbindungsrohrs mit der Eintrittsöffnung des vorlaufseitigen Verbindungsrohrs eines weiteren Wärmetauscherelements gelenkig fluidisch verbindbar. Somit ist eine gegenseitige, insbesondere stufenlose, Verschwenkbarkeit des Wärmetauscherelements und des weiteren Wärmetauscherelements um eine Mittelachse des jeweiligen Verbindungsrohrs ermöglicht.

Ein weiterer Vorteil der vorliegenden Erfindung ist, dass mehrere fluidisch miteinander verbindbare Wärmetauscherelemente mit dieser Konfiguration auf einfache Art und Weise an unterschiedliche Rohrleitungsquerschnitte anpassbar sind.

Die Winkellage der Wärmetauscherelemente zueinander kann einen von 0° verschiedenen Winkel oder einen Winkel von 0° einschließen.

Bevorzugt sind die Verbindungsrohre in einer Draufsicht auf die Wärmetauscherkammer gesehen punktsymmetrisch zu einem Flächenschwerpunkt der Wärmetauscherkammer ausgebildet, wobei eine Erstreckung der Verbindungsrohre in Längsrichtung zusammengenommen im Wesentlichen einer Erstreckung der Wärmetauscherkammer in Längsrichtung entspricht. Somit ist die Erstreckung der Verbindungrohre in Längsrichtung etwa halb so groß wie die Erstreckung der Wärmetauscherkammer in Längsrichtung.

Alternativ dazu kann die Erstreckung der Verbindungrohre in Längsrichtung etwa vorlaufseitig 1/4 bzw. 1/3 der Erstreckung der Wärmetauscherkammer in Längsrichtung betragen und rücklaufseitig etwa 3/4 bzw. 2/3 oder umgekehrt.

Dabei ist eine solche Ausbildung der Verbindungsrohre streng genommen nicht mehr symmetrisch, insbesondere punktsymmetrisch, wie oben beschrieben. Da aber zumindest der am stromabseitigen Endabschnitt der Wärmetauscherkammer liegende Auslauf des vorlaufseitigen Verbindungsrohrs punktsymmetrisch zu dem Einlauf des rücklaufseitigen Verbindungsrohrs am stromaufseitigen Endabschnitt der Wärmetauscherkammer ist, gilt auch die derartige Ausbildung der Verbindungsrohre im Sinne der Erfindung als punktsymmetrisch.

Bevorzugt sind der Einlauf und der Auslauf der Wärmetauscherkammer in einer Draufsicht auf die Wärmetauscherkammer gesehen punktsymmetrisch zu einem Flächenschwerpunkt der Wärmetauscherkammer ausgebildet.

Insbesondere kann das Wärmetauscherelement in einer Draufsicht auf die Wärmetauscherkammer gesehen punktsymmetrisch zu einem Flächenschwerpunkt der Wärmetauscherkammer ausgebildet sein.

Bevorzugt ist in der Draufsicht auf das Wärmetauscherelement und bezüglich der Abwasserfließrichtung gesehen die Eintrittsöffnung des vorlaufseitigen Verbindungsrohrs stromauf des Auslaufs des vorlaufseitigen Verbindungsrohrs ausgebildet, der vorlaufseitige Einlauf der Wärmetauscherkammer stromab des rücklaufseitigen Auslaufs der Wärmetauscherkammer ausgebildet und der Einlauf des rücklaufseitigen Verbindungsrohrs stromauf der Austrittsöffnung des rücklaufseitigen Verbindungsrohrs ausgebildet.

Bevorzugt ist in der Draufsicht auf das Wärmetauscherelement und bezüglich einer Abwasserfließrichtung gesehen der vorlaufseitige Einlauf der Wärmetauscherkammer stromab des rücklaufseitigen Auslaufs der Wärmetauscherkammer ausgebildet.

Mit dieser Konfiguration ist eine Hauptdurchströmungsrichtung des Wärmetauscherfluids durch die Wärmetauscherkammer entgegen der Fließrichtung des Abwassers gerichtet, wodurch eine Wärmeaufnahme des Wärmetauscherfluids erhöht werden kann.

Weiter ist mit dieser Konfiguration eine Fließrichtung des Wärmetauscherfluids in den Verbindungsrohren stets in Fließrichtung des Abwassers gerichtet, wodurch ein Transport zu einem weiteren Wärmetauscherelement bzw. dessen Wärmetauscherkammer verbessert, insbesondere beschleunigt ist, da das Wärmetauscherfluid in den Verbindungsrohren ungehindert fließen kann.

Auf der Außenseite des Oberschalenabschnitts können Strukturen, beispielsweise etwa halbkugelige Erhebungen, ausgebildet sein, um eine turbulente Strömung des Abwassers an der Außenseite des Oberschalenabschnitts zu erzeugen, wodurch vorteilhafterweise Ablagerungen an der Außenseite des Oberschalenabschnitts, insbesondere eine sogenannte Sielhaut, verringert oder verhindert werden können. Die auf der Innenseite des Oberschalenabschnitts ausgebildeten entsprechenden Negativformen der auf der Außenseite etwa halbkugeligen Erhebungen - also etwa halbkugelige Auswölbungen - erzeugen in der Wärmetauscherkammer ebenfalls eine turbulente Strömung, insbesondere Verwirbelungen, im Wärmetauscherfluid, wodurch ein Wärmeübergang von dem Oberschalenabschnitt zu dem Wärmetauscherfluid bzw. eine Wärmeaufnahme des Wärmetauscherfluids verbessert werden kann.

Die Strukturen können in regelmäßigen Abständen zueinander ausgebildet sein. Alternativ oder zusätzlich dazu können die Strukturen in unregelmäßigen Abständen zueinander ausgebildet sein.

Die Strukturen können in einem, insbesondere wabenartigen, Muster oder auch in gewellten länglichen Formen ausgebildet sein.

Weiter können im Inneren der Wärmetauscherkammer Verbindungsstege zwischen den Innenseiten von Unterschalenabschnitt und Oberschalenabschnitt ausgebildet sein, um die Wärmetauscherkammer gegen einen darin entstehenden Innendruck zu stabilisieren und so eine Verformung, insbesondere eine Aufweitung, der Wärmetauscherkammer zu verhindern. Der Innendruck kann beispielsweise bis zu 10 bar betragen. Der Abstand zwischen Oberschalenabschnitt und Unterschalenabschnitt beträgt beispielsweise etwa 3 mm.

Zudem kann mittels der Verbindungsstege eine turbulente Strömung in dem Wärmetauscherfluid mit den oben erwähnten Vorteilen erzeugt bzw. verstärkt werden.

Die Verbindungsstege können in regelmäßigen Abständen zueinander ausgebildet sein. Alternativ oder zusätzlich dazu können die Verbindungsstege in unregelmäßigen Abständen zueinander ausgebildet sein.

Die Verbindungsstege können in einem, insbesondere wabenartigen, Muster ausgebildet sein.

Die Verbindungsstege können quer zur Hauptdurchströmungsrichtung des Wärmetauscherfluids in der Wärmetauscherkammer ausgebildet sein, um einen Fließweg des Wärmetauscherfluids in der Wärmetauscherkammer zu verlängern.

Zusätzlich dazu können die Verbindungsstege wechselseitig hintereinander, quasi auf Lücke, angeordnet sein, um den Fließweg des Wärmetauscherfluids meanderförmig durch die Wärmetauscherkammer auszubilden.

Insbesondere sind die Verbindungsstege so angeordnet, dass mit möglichst geringen Druckverlusten eine möglichst turbulente Strömung im Wärmetauscher entsteht.

Mit dieser Konfiguration kann die Wärmeaufnahme des Wärmetauscherfluids erhöht und es können auch die Differenzdrücke gesenkt werden.

Die Wärmetauscherkammer kann aus Edelstahl hergestellt sein. Dabei können der Oberschalenabschnitt und der Unterschalenabschnitt als separate Bauteile ausgebildet und fluiddicht und druckdicht miteinander verbunden sein. Die dann mit dem Oberschalenabschnitt und dem Unterschalenabschnitt verbundenen Verbindungsstege tragen zur Druckfestigkeit der Wärmetauscherkammer bei. Die jeweiligen Verbindungen können beispielsweise durch Schweißen oder Kleben hergestellt sein.

Der Auslauf des vorlaufseitigen Verbindungsrohrs kann in Einbaulage des Wärmetauscherelements und bezüglich der Abwasserfließrichtung gesehen auf gleicher Höhe ausgebildet sein wie der vorlaufseitige Einlauf der Wärmetauscherkammer.

Der Auslauf der rücklaufseitigen Wärmetauscherkammer kann in Einbaulage des Wärmetauscherelements und bezüglich der Abwasserfließrichtung gesehen auf gleicher Höhe ausgebildet sein wie der rücklaufseitige Einlauf des Verbindungsrohrs.

Bevorzugt ist eine Erstreckung in Längsrichtung und/oder eine Erstreckung in Breitenrichtung des Wärmetauscherelements in mehreren verschiedenen Standardgrößen ausgebildet.

Mit dieser Konfiguration kann mit wenigen standardisierten unterschiedlich dimensionierten Wärmetauscherelementen ein großer Bereich an Abwasserrohrleitungsgeometrien, insbesondere Querschnitten von Abwasserrohrleitungen, und Geometrien von Zugangsschächten zu Abwasserrohrleitungen abgedeckt werden. Eine individuell an den konkreten Abwasserrohrleitungsquerschnitt angepasste Einzelfertigung eines oder mehrerer Wärmetauscherelemente ist nicht mehr nötig.

Weiter kann mit dieser Konfiguration eine Herstellung der standardisierten Wärmetauscherelemente vereinfacht, insbesondere zumindest teilweise automatisiert, werden. Insbesondere können die standardisierten Wärmetauscherelemente auf Vorrat produziert werden, wodurch eine Verfügbarkeit gesteigert bzw. eine Lieferzeit verkürzt werden kann.

Bevorzugt kann das Wärmetauscherelement und/oder die Wärmetauscherkammer eine in der Draufsicht auf das Wärmetauscherelement gesehen konkave Wölbung aufweisen.

Die Wölbung kann einen Radius von etwa 1.000 mm aufweisen. In einer Abwasserrohrleitung mit 2.000 mm Durchmesser würde das Wärmetauscherelement also vollflächig aufliegen, in einer Abwasserrohrleitung mit 800 mm Durchmesser wäre der größte Abstand des in Breitenrichtung gesehen mittig in der Abwasserrohrleitung positionierten Wärmetauscherelements etwa 10 mm.

Für Abwasserrohrleitungen mit kleinerem Durchmesser kann der Radius der Wölbung entsprechend kleiner gewählt sein. Bei Abwasserrohrleitungen mit größerem Durchmesser kann der Radius der Wölbung entsprechend größer gewählt werden.

Ein weiterer Aspekt betrifft ein Wärmetauschermodul mit einem zuvor beschriebenen Wärmetauscherelement, wobei der Vorlaufleitungsabschnitt vorlaufseitig an der Wärmetauscherkammer ausgebildet ist und der Rücklaufleitungsabschnitt rücklaufseitig an der Wärmetauscherkammer ausgebildet ist. Der Einlauf der Wärmetauscherkammer ist mit dem Ausgang des Vorlaufleitungsabschnitts fluidisch verbunden und der Auslauf der Wärmetauscherkammer ist mit dem Eingang des Rücklaufleitungsabschnitts fluidisch verbunden. Alternativ dazu ist die Eintrittsöffnung des vorlaufseitigen Verbindungsrohrs mit einem Ausgang des Vorlaufleitungsabschnitts fluidisch verbunden und die Austrittsöffnung des rücklaufseitigen Verbindungsrohrs ist mit einem Eingang des Rücklaufleitungsabschnitts fluidisch verbunden.

Es ist ein Vorteil der vorliegenden Erfindung, dass die günstigen Eigenschaften des oben beschriebenen Wärmetauscherelements in einem standardisierten Baustein als Wärmetauschermodul verwirklicht werden.

Es ist ein weiterer Vorteil der vorliegenden Erfindung, dass ein Transport von Wärmetauschermodulen zu einer bestehenden Abwasserrohrleitung vereinfacht bzw. effektiver gestaltet werden kann, da die Wärmetauschermodule erst vor Ort aus dem jeweiligen Wärmetauscherelement, Vorlaufleitungsabschnitt und Rücklaufleitungsabschnitt zusammengesetzt werden können.

Bevorzugt ist das Wärmetauscherelement derart in Längseinbaulage ausgerichtet, dass eine Hauptdurchströmungsrichtung des Wärmetauscherfluids in der Wärmetauscherkammer etwa in Längsrichtung ausgerichtet ist oder ist das Wärmetauscherelement derart in Quereinbaulage ausgerichtet, dass eine Hauptdurchströmungsrichtung des Wärmetauscherfluids in der Wärmetauscherkammer etwa in Breitenrichtung ausgerichtet ist.

Wie oben beschrieben, können eine Erstreckung in Längsrichtung und/oder eine Erstreckung in Breitenrichtung des Wärmetauscherelements in mehreren verschiedenen Standardgrößen ausgebildet sein.

Beispielsweise kann das Wärmetauscherelement innerhalb des Wärmetauschermoduls in jeweils einer von zwei, drei, vier oder fünf verschiedenen Standardlängen und Standardbreiten vorgesehen sein.

Insbesondere kann das Wärmetauscherelement eine Standardlänge von etwa 0,5 m, 1 m, 1,5 m oder 2 m aufweisen.

Insbesondere kann das Wärmetauscherelement eine Standardbreite von etwa 0,10 m, 0,20 m, 0,30 m, 0,40 m oder 0,50 m aufweisen.

Mit dieser Konfiguration ist das, insbesondere nachträgliche, Einbringen des Wärmetauschermoduls in eine Abwasserrohrleitung einfacher möglich. Weiter ist mit dieser Konfiguration ein Anpassen des Wärmetauschermoduls an den Querschnitt der jeweiligen Abwasserrohrleitung einfacher möglich, ohne eine Maßanfertigung dafür vornehmen zu müssen.

Bevorzugt ist der Vorlaufleitungsabschnitt entlang der vorlaufseitigen Längsseite der Wärmetauscherkammer ausgebildet und der Rücklaufleitungsabschnitt ist entlang der rücklaufseitigen Längsseite der Wärmetauscherkammer ausgebildet.

Weiter bevorzugt entspricht dabei eine jeweilige Erstreckung des Vorlaufleitungsabschnitts und des Rücklaufleitungsabschnitts in Längsrichtung im Wesentlichen der Erstreckung der Wärmetauscherkammer in Längsrichtung.

Der mit dem jeweiligen Verbindungsrohr fluidisch verbundene Vorlaufleitungsabschnitt und/oder Rücklaufleitungsabschnitt sind/ist um eine Mittelachse des Verbindungsrohrs, insbesondere stufenlos, verschwenkbar, um eine Erstreckung des Wärmetauschermoduls in Breitenrichtung zu verändern

Mit dieser Konfiguration kann eine Anpassung des Wärmetauschermoduls an den Querschnitt der Abwasserrohrleitung weiter unterstützt werden. Zudem kann mit dieser Konfiguration je nach den örtlichen Anforderungen und/oder Gegebenheiten ein, insbesondere strömungstechnisch, günstiger Platz für den Vorlaufleitungsabschnitt und/oder Rücklaufleitungsabschnitt im Rahmen der Verschwenkbarkeit gewählt werden.

Bevorzugt weist das beschriebene Wärmetauschermodul mehrere Wärmetauscherelemente auf, wobei das jeweils vorlaufseitige Wärmetauscherelement mit dem jeweils bezüglich dazu rücklaufseitigen Wärmetauscherelement derart fluidisch verbunden ist, dass die Austrittsöffnung des rücklaufseitigen Verbindungsrohrs des vorlaufseitigen Wärmetauscherelements zugfest und in Bezug auf das Wärmetauscherfluid dicht, insbesondere druckdicht, mit der Eintrittsöffnung des vorlaufseitigen Verbindungsrohrs des rücklaufseitigen Wärmetauscherelements fluidisch verbunden ist.

Beispielsweise können innerhalb des Wärmetauschermoduls mehrere Wärmetauscherelemente in zwei, drei, vier oder fünf verschiedenen Standardlängen und Standardbreiten vorgesehen sein, die miteinander, insbesondere je nach Anforderung, nahezu beliebig kombinierbar sein können. Es versteht sich dabei, dass innerhalb des jeweiligen Wärmetauschermoduls vorzugsweise Wärmetauscherelemente mit gleicher Länge sinnvoll kombinierbar sind.

Mit dieser Konfiguration ist das, insbesondere nachträgliche, Einbringen des Wärmetauschermoduls in eine Abwasserrohrleitung einfacher möglich. Weiter ist mit dieser Konfiguration ein Anpassen des Wärmetauschermoduls an den Querschnitt der jeweiligen Abwasserrohrleitung möglich, ohne eine Maßanfertigung dafür vornehmen zu müssen.

Die in Breitenrichtung aneinander angrenzenden Wärmetauscherelemente sind zueinander um eine Mittelachse der Verbindungsrohre, insbesondere stufenlos, verschwenkbar, um eine Erstreckung des Wärmetauscherelements in Breitenrichtung zu verändern.

Mit dieser Konfiguration ist das, insbesondere nachträgliche, Einbringen des Wärmetauschermoduls in eine Abwasserrohrleitung auf sehr einfache Art und Weise möglich, da eine Erstreckung des Wärmetauschermoduls in der Breitenrichtung flexibel ist. Weiter ist mit dieser Konfiguration eine Anpassung des Wärmetauschermoduls an unterschiedliche Abwasserrohrleitungsquerschnitte sehr einfach möglich, ohne ein Wärmetauschermodul mit schmaleren oder breiteren Wärmetauscherelementen einsetzen zu müssen.

Weiter kann mit dieser Konfiguration ein Transport von Wärmetauschermodulen zu einer bestehenden Abwasserrohrleitung vereinfacht bzw. effektiver gestaltet werden, da die Wärmetauschermodule für den Transport sogar zusammengeklappt werden können bzw. erst vor Ort aus den jeweiligen Wärmetauscherelementen, den Vorlaufleitungsabschnitten und Rücklaufleitungsabschnitten zusammengestellt werden müssten.

Bevorzugt ist an mindestens einem Wärmetauscherelement ein Niederhalter vorgesehen, der das angrenzende Wärmetauscherelement gegen eine Bewegung, insbesondere ein Verschwenken, entgegen der Schwerkraftrichtung sichert. Zu einer solchen Bewegung entgegen der Schwerkraftrichtung kann es beispielsweise durch Aufschwimmen wegen unter dem Wärmetauscherelement befindlichen Abwassers kommen. Gegen eine Bewegung in Schwerkraftrichtung muss keine Maßnahme getroffen werden, da das Wärmetauscherelement in der Regel auf der Innenwandung der Abwasserrohrleitung aufliegt bzw. der Abstand dazwischen und damit die Durchbiegung des Wärmetauscherelements nach unten gering ist.

Beispielsweise kann der Niederhalter an einem stromaufseitigen Endabschnitt und/oder einem stromabseitigen Endabschnitt des jeweiligen Verbindungsrohrs ausgebildet sein, an dem zwei in Breitenrichtung aneinandergrenzende Wärmetauscherelemente fluidisch miteinander verbunden sind. Der Niederhalter kann dabei in Einbaulage und in Abwasserflussrichtung gesehen als ein in seiner Winkellage zur Breitenrichtung, insbesondere stufenlos, einstellbarer Arm ausgebildet sein, der auf die Außenseite des Oberschalenabschnitts des vorlaufseitig oder rücklaufseitig angrenzenden Wärmetauscherelements drückt. An dem Arm kann eine Klemmvorrichtung ausgebildet sein, die den Arm in Längsrichtung des Verbindungsrohrs gesehen zum kraftschlüssigen Fixieren der Winkellage an dem Verbindungsrohr festklemmt.

Es ist denkbar, den Niederhalter auch als eine Schweißnaht oder eine Verklebung an dem stromaufseitigen Endabschnitt und/oder dem stromabseitigen Endabschnitt des Verbindungsrohrs vorzusehen, mittels der eine Lage der aneinander angrenzenden Wärmetauscherelemente zueinander fixiert ist. Die Schweißnaht oder die Verklebung kann beispielsweise vor Ort nach Einbringen des Wärmetauschermoduls in die Abwasserrohrleitung angefertigt werden.

Ein weiterer Aspekt betrifft ein Wärmetauschersystem aus mehreren in Längsrichtung hintereinander angeordneten zuvor beschriebenen Wärmetauschermodulen, wobei eine Vorlaufleitung und eine Rücklaufleitung des Wärmetauschersystems mittels zugfester und in Bezug auf das Wärmetauscherfluid dichter, insbesondere druckdichter, Fluidverbindung der jeweils in Längsrichtung aneinander angrenzenden Vorlaufleitungsabschnitte und Rücklaufleitungsabschnitte ausgebildet sind.

Ein Vorteil der vorliegenden Erfindung ist, dass ein Wärmetauschersystem mit der vorliegenden Konfiguration auf einfache Art und Weise zur Verfügung gestellt werden kann, das die oben zu dem Wärmetauscherelement und zu dem Wärmetauschermodul beschriebenen Vorteile aufweist.

Die Vorlaufleitung und die Rücklaufleitung können in Anlehnung an das sogenannte "Tichelmann-System" ausgelegt sein, das insbesondere bei der Verrohrung von Heizkörpern Anwendung findet.

Beispielsweise können innerhalb des Wärmetauschersystems mehrere Wärmetauschermodule hintereinander mit Wärmetauscherelementen in zwei, drei, vier oder fünf verschiedenen Standardlängen vorgesehen sein, die innerhalb des Wärmetauschersystems, insbesondere je nach Anforderung, nahezu beliebig kombinierbar sein können. Es versteht sich dabei, dass innerhalb des Wärmetauschersystems vorzugsweise Wärmetauschermodule mit in der Breitenrichtung identisch angeordneten Wärmetauscherelementen sinnvoll kombinierbar sind.

Mit dieser Konfiguration ist das, insbesondere nachträgliche, Einbringen des Wärmetauschersystems mit mehreren hintereinander angeordneten Wärmetauschermodulen in eine Abwasserrohrleitung einfacher möglich, da mit den oben genannten Vorteilen einzelne Wärmetauschermodule des Wärmetauschersystems und/oder sogar einzelne Wärmetauscherelemente der Wärmetauschermodule einbringbar sind. Weiter ist mit dieser Konfiguration ein Anpassen des Wärmetauschersystems mit mehreren hintereinander angeordneten Wärmetauschermodulen an den Querschnitt der jeweiligen Abwasserrohrleitung einfacher möglich, ohne ein Wärmetauschermodul mit schmaleren oder breiteren Wärmetauscherelementen einsetzen zu müssen oder gar eine Maßanfertigung dafür vornehmen zu müssen.

Alternativ oder zusätzlich zu dem oben beschriebenen Niederhalter kann bei dem Wärmetauschersystem ein ähnlich dazu ausgebildeter Niederhalter vorgesehen sein, der ein in und/oder entgegen der Längsrichtung angrenzendes Wärmetauscherelement eines weiteren Wärmetauschermoduls gegen eine Bewegung, insbesondere ein Verschwenken, entgegen der Schwerkraftrichtung sichert.

Nachfolgend sind Ausführungsbeispiele des erfindungsgemäßen Wärmetauscherelements, Wärmetauschermoduls und Wärmetauschersystems anhand von Zeichnungen näher erläutert. Es versteht sich, dass die vorliegende Erfindung nicht auf die nachstehend beschriebenen Ausführungsbeispiele beschränkt ist und dass einzelne Merkmale davon zu weiteren Ausführungsbeispielen kombiniert werden können.

Es zeigen:
- **Fig. 1**: eine Draufsicht eines Wärmetauscherelements gemäß einem Ausführungsbeispiel der Erfindung,
- **Fig. 2**: eine Draufsicht eines Wärmetauschermoduls mit mehreren Wärmetauscherelementen gemäß dem Ausführungsbeispiel in Fig. 1 in Längseinbaulage,
- **Fig. 3**: eine Draufsicht eines Wärmetauschermoduls mit mehreren Wärmetauscherelementen gemäß dem Ausführungsbeispiel in Fig. 1 in Quereinbaulage,
- **Fig. 4**: eine Draufsicht eines Wärmetauscherelements gemäß einem weiteren Ausführungsbeispiel der Erfindung,
- **Fig. 5**: eine Draufsicht eines Wärmetauschermoduls mit mehreren Wärmetauscherelementen gemäß dem weiteren Ausführungsbeispiel in Fig. 4 in Längseinbaulage,
- **Fig. 6**: eine Vorderansicht eines Wärmetauschermoduls gemäß Fig. 5, die zwei verschiedene Anpassungsmöglichkeiten zeigt,
- **Fig. 7**: eine räumliche Ansicht eines Wärmetauschersystems mit mehreren Wärmetauschermodulen gemäß Fig. 5,
- **Fig. 8**: eine räumliche Ansicht eines Wärmetauschersystems mit mehreren Wärmetauschermodulen gemäß Fig. 5 in Quereinbaulage,
- **Fig. 9**: eine räumliche Ansicht eines Wärmetauschersystems mit mehreren Wärmetauschermodulen gemäß Fig. 3,
- **Fig. 10**: eine Vorderansicht eines Wärmetauschermoduls gemäß Fig. 4,
- **Fig. 11**: eine vergrößerte Vorderansicht auf einen Niederhalter gemäß des in Fig. 10 angegebenen Details und
- **Fig. 12**: eine schematische Prinzipdarstellung des Tichelmann-Systems.

In den nachfolgenden Figuren sind die Längsrichtung LR, die Abwasserfließrichtung AR, die Breitenrichtung BR und die Schwerkraftrichtung SR mittels Richtungspfeilen dargestellt, insbesondere in der Art eines Koordinatensystems. Obwohl die Richtungspfeile jeweils lediglich in eine Richtung zeigen, kann mit Ausnahme der Schwerkraftrichtung SR eine Richtungsangabe in der Gegenrichtung verlaufen.

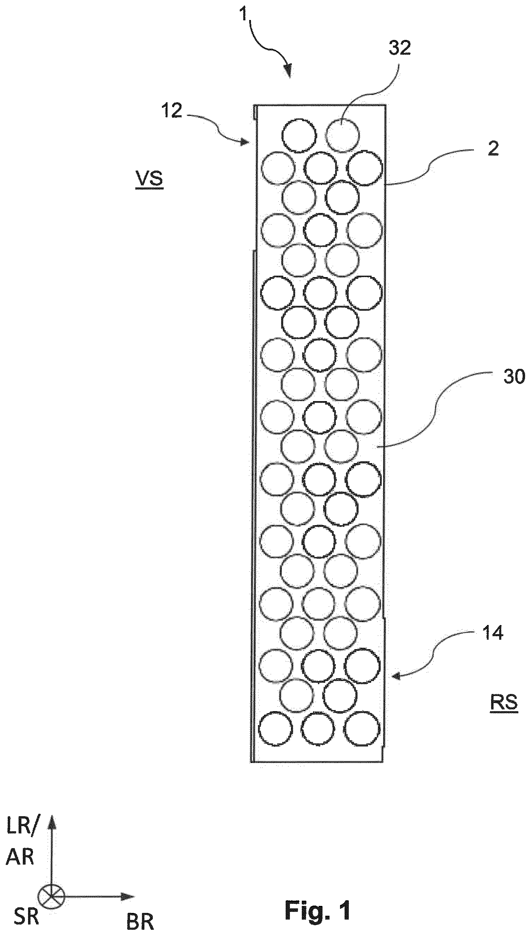

An dem in **Fig. 1** in der Draufansicht gezeigten Wärmetauscherelement 1 ist vorlaufseitig VS an einem in Abwasserfließrichtung AR gesehen stromab ausgebildeten Endabschnitt des Wärmetauscherelements 1 ein Einlauf 12 in eine Wärmetauscherkammer 2 ausgebildet.

An dem in Abwasserfließrichtung AR gesehen stromauf ausgebildeten Endabschnitt des Wärmetauscherelements 1 ist ein Auslauf 14 aus der Wärmetauscherkammer 2 ausgebildet.

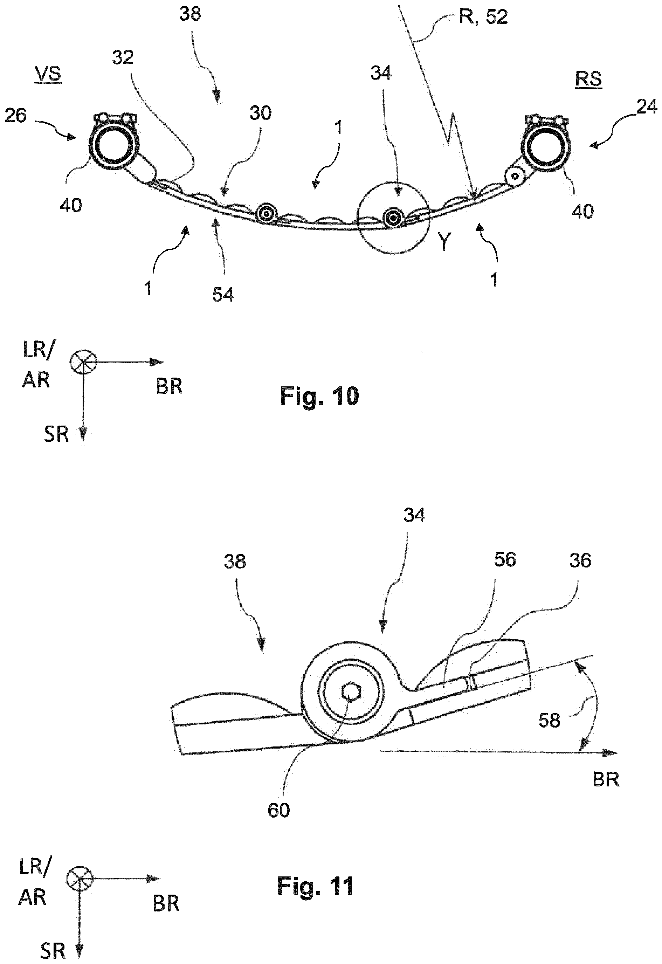

An einer Außenseite eines Oberschalenabschnitts 30 der Wärmetauscherkammer 2 sind in einem wabenartigen Muster halbkugelförmige Erhebungen 32 ausgebildet, die ein Anhaften von Schmutz und so die Bildung einer sogenannten Sielhaut an der Außenseite des Oberschalenabschnitts 30 verhindern sollen. Der Oberschalenabschnitt 30 begrenzt die Wärmetauscherkammer 2 nach oben, wobei ein in Fig. 10 gezeigter Unterschalenabschnitt 54 die Wärmetauscherkammer 2 nach unten begrenzt. Der Oberschalenabschnitt 30 und der Unterschalenabschnitt 54 können als separate Bauteile ausgebildet und miteinander fluidisch verbunden, insbesondere miteinander verschweißt oder verklebt sein. Bei dem aus Edelstahl hergestellten Oberschalenabschnitt 30 können die halbkugelförmigen Erhebungen 32 mittels einer Prägetechnik oder Gesenkschmiedetechnik erzeugt und damit einstückig mit dem Oberschalenabschnitt 30 ausgebildet sein.

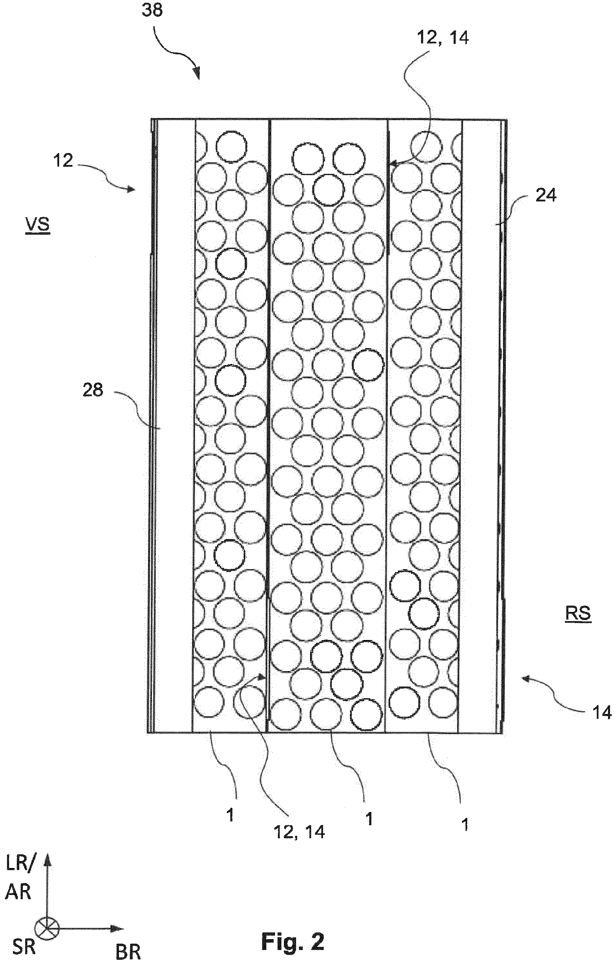

Das in **Fig. 2** in der Draufsicht gezeigte Wärmetauschermodul 38 weist drei Wärmetauscherelemente 1 gemäß dem in Fig. 1 gezeigten Ausführungsbeispiel in Längseinbaulage auf.

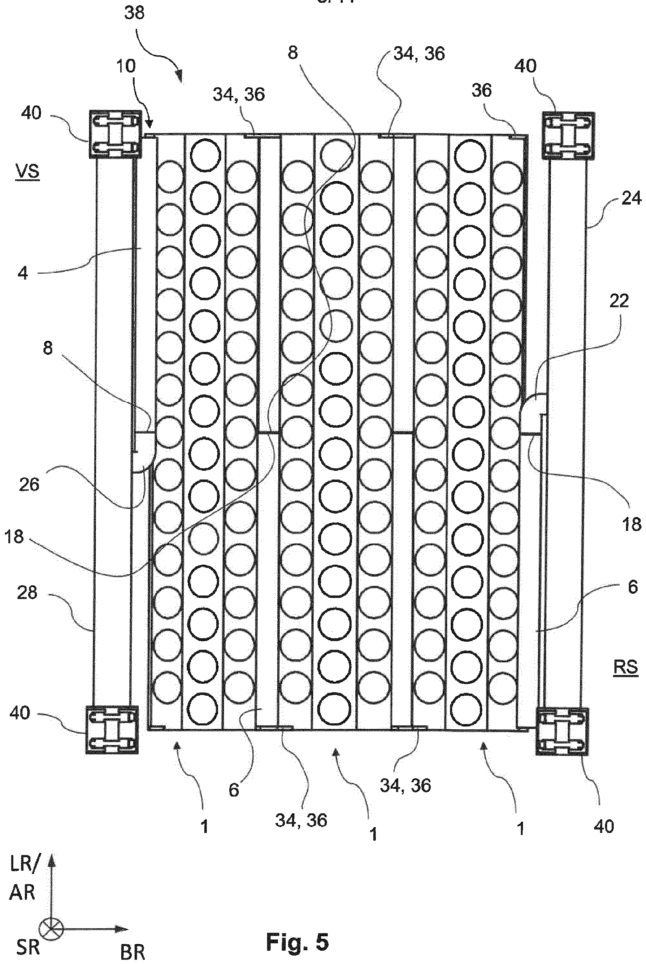

Der Einlauf 12 des ersten vorlaufseitigen Wärmetauscherelements 1 ist mit einem in Fig. 5 dargestellten Ausgang 26 des Vorlaufleitungsabschnitts 28 starr fluidisch verbunden. Da diese Verbindung beispielsweise mittels Schweißen oder Kleben hergestellt ist, ist sie in der Regel zugfest ausgebildet.

Die jeweiligen Ausläufe 14 der weiteren Wärmetauscherelemente 1 sind mit den Einläufen 12 der in Breitenrichtung BR angrenzenden Wärmetauscherelemente 1 starr fluidisch verbunden.

Der Auslauf 14 des letzten rücklaufseitigen Wärmetauscherelements 1 ist mit einem hier nicht dargestellten Eingang 22 des Rücklaufleitungsabschnitts 24 starr fluidisch verbunden. Da diese Verbindung beispielsweise mittels Schweißen oder Kleben hergestellt ist, ist sie in der Regel zugfest ausgebildet.

An dem jeweiligen Endabschnitt des Vorlaufleitungsabschnitts 28 und des Rücklaufleitungsabschnitts 24 ist jeweils ein in Fig. 5 gezeigtes Verbindungselement 40 vorgesehen, mittels dem ein jeweiliger Vorlaufleitungsabschnitt 28 bzw. Rücklaufleitungsabschnitt 24 eines weiteren Wärmetauschermoduls 38 zugfest und fluidisch verbindbar ist.

Das mittlere Wärmetauscherelement 1 unterscheidet sich in Bezug auf die Konfiguration des Einlaufs 12 bzw. des Auslaufs 14 von den äußeren Wärmetauscherelementen 1, deren diesbezügliche Konfiguration in Fig. 1 beschrieben ist.

An dem mittleren Wärmetauscherelement 1 ist der Einlauf 12 an einem in Abwasserfließrichtung AR gesehen stromauf ausgebildeten Endabschnitt des Wärmetauscherelements 1 ausgebildet. Der Auslauf 14 ist an dem in Abwasserfließrichtung AR gesehen stromab ausgebildeten Endabschnitt des mittleren Wärmetauscherelements 1 ausgebildet.

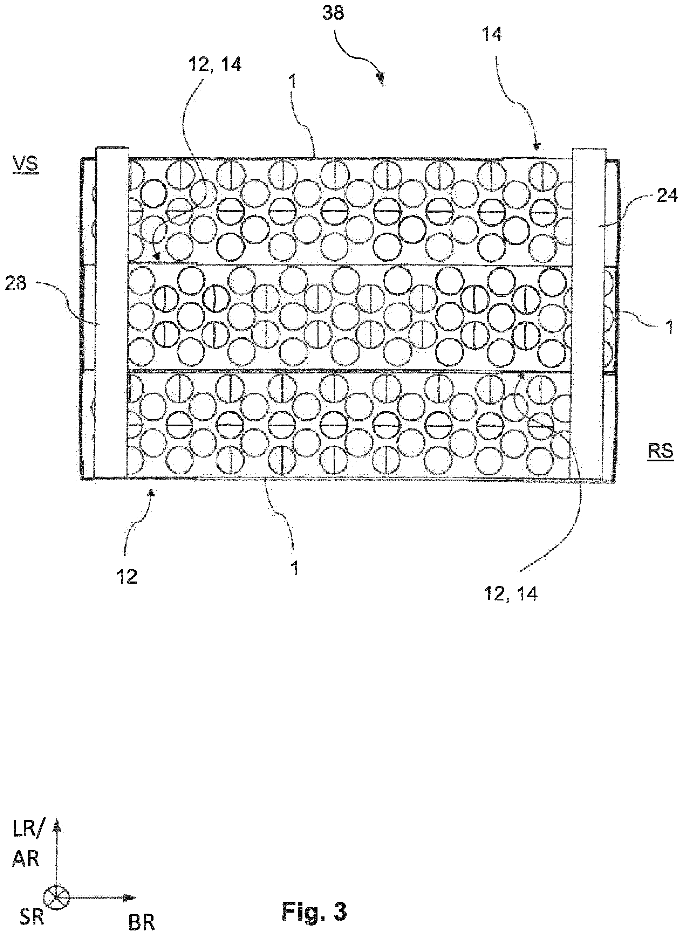

Das in **Fig. 3** in der Draufansicht gezeigte Wärmetauschermodul 38 weist im Unterschied zu dem in Fig. 2 gezeigten Wärmetauschermodul 38 drei Wärmetauscherelemente 1 gemäß dem in Fig. 1 gezeigten Ausführungsbeispiel in Quereinbaulage auf. Wie eingangs der Beschreibung erwähnt, wurden der Übersichtlichkeit wegen die für die bevorzugte Längseinbaulage geprägten Begriffe für die betreffenden Teile bzw. Merkmale konsistent und deswegen unabhängig von der Einbaulage verwendet.

Der Einlauf 12 des ersten vorlaufseitigen Wärmetauscherelements 1 ist mit einem in Fig. 5 dargestellten Ausgang 26 des Vorlaufleitungsabschnitts 28 starr fluidisch verbunden. Da diese Verbindung beispielsweise mittels Schweißen oder Kleben hergestellt ist, ist sie in der Regel zugfest ausgebildet. Das erste vorlaufseitige Wärmetauscherelement 1 ist bei der dargestellten Quereinbaulage der Wärmetauscherelemente 1 das in Abwasserfließrichtung AR stromauf der anderen Wärmetauscherelemente 1 gelegene Wärmetauscherelement 1. Da dies als erstes von dem Vorlaufleitungsabschnitt 28 mit Wärmetauscherfluid versorgt ist, ist die Bezeichnung "erstes vorlaufseitiges Wärmetauscherelement" dennoch zutreffend.

Die jeweiligen Ausläufe 14 der weiteren Wärmetauscherelemente 1 sind mit den Einläufen 12 der in Längsrichtung LR bzw. Abwasserfließrichtung AR angrenzenden Wärmetauscherelemente 1 starr fluidisch verbunden.

Der Auslauf 14 des letzten rücklaufseitigen Wärmetauscherelements 1 ist mit einem hier nicht dargestellten Eingang 22 des Rücklaufleitungsabschnitts 24 starr fluidisch verbunden. Da diese Verbindung beispielsweise mittels Schweißen oder Kleben hergestellt ist, ist sie in der Regel zugfest ausgebildet.

Ähnlich wie zu Fig. 2 beschrieben unterscheidet sich das mittlere Wärmetauscherelement 1 in Bezug auf die Konfiguration des Einlaufs 12 bzw. des Auslaufs 14 von den äußeren Wärmetauscherelementen 1, deren diesbezügliche Konfiguration in Fig. 1 beschrieben ist. Dabei versteht sich, dass bei der hier gezeigten Quereinbaulage die bei der Beschreibung zu Fig. 2 verwendeten Begriffe für die Richtungen gedanklich um 90° zu drehen sind.

An dem mittleren Wärmetauscherelement 1 ist der Einlauf 12 somit an dem rücklaufseitig RS ausgebildeten Endabschnitt des Wärmetauscherelements 1 ausgebildet. Der Auslauf 14 ist an dem vorlaufseitig VS ausgebildeten Endabschnitt des mittleren Wärmetauscherelements 1 ausgebildet.

An dem jeweiligen Endabschnitt des Vorlaufleitungsabschnitts 28 und des Rücklaufleitungsabschnitts 24 ist jeweils ein in Fig. 5 gezeigtes Verbindungselement 40 vorgesehen, mittels dem ein jeweiliger Vorlaufleitungsabschnitt 28 bzw. Rücklaufleitungsabschnitt 24 eines weiteren Wärmetauschermoduls 38 zugfest und fluidisch verbindbar ist.

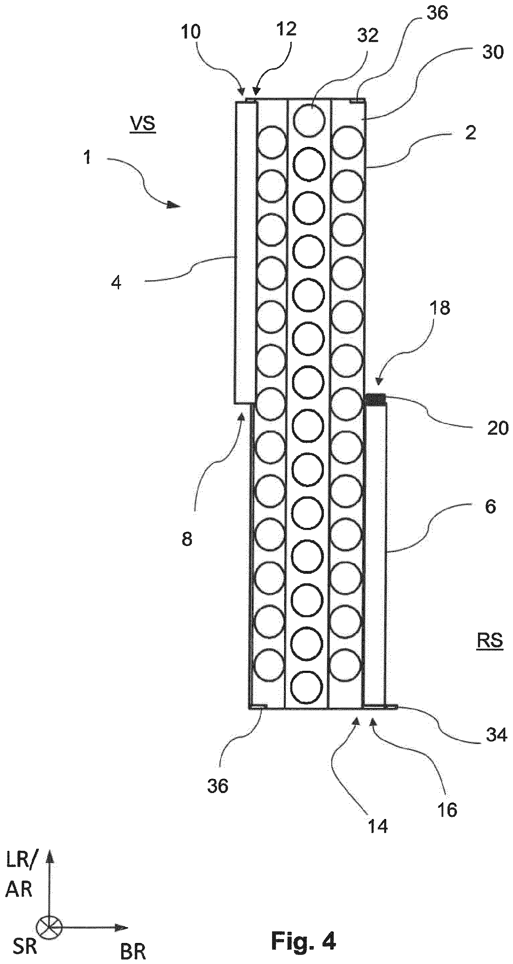

An dem in **Fig. 4** in der Draufansicht gezeigten Wärmetauscherelement 1 ist vorlaufseitig VS an dessen Wärmetauscherkammer 2 ein vorlaufseitiges Verbindungsrohr 4 und rücklaufseitig RS ein rücklaufseitiges Verbindungsrohr 6 ausgebildet.

An dem vorlaufseitigen Verbindungsrohr 4 ist an dessen in Abwasserfließrichtung AR gesehen stromauf ausgebildeten Endabschnitt eine Eintrittsöffnung 8 ausgebildet. An dem in Abwasserfließrichtung AR gesehen stromab ausgebildeten Endabschnitt des vorlaufseitigen Verbindungsrohrs 4 ist ein Auslauf 10 ausgebildet, der mit einem an dem in Abwasserfließrichtung AR gesehen stromab ausgebildeten Endabschnitt des Wärmetauscherelements 1 ausgebildeten Einlauf 12 der Wärmetauscherkammer 2 fluidisch verbunden ist.

An dem in Abwasserfließrichtung AR gesehen stromauf ausgebildeten Endabschnitt des Wärmetauscherelements 1 ist ein Auslauf 14 der Wärmetauscherkammer 2 ausgebildet, der mit einem Einlauf 16 des rücklaufseitigen Verbindungsrohrs 6 fluidisch verbunden ist. Der Einlauf 16 des rücklaufseitigen Verbindungsrohrs 6 ist an dem in Abwasserfließrichtung AR gesehen stromauf ausgebildeten Endabschnitt des rücklaufseitigen Verbindungsrohrs 6 ausgebildet.

An einem in Abwasserfließrichtung AR gesehen stromab ausgebildeten Endabschnitt des rücklaufseitigen Verbindungsrohrs 6 ist eine Austrittsöffnung 18 des rücklaufseitigen Verbindungsrohrs 6 mit einem Kupplungselement 20 ausgebildet. Mittels des Kupplungselements 20 ist die Austrittsöffnung 18 des rücklaufseitigen Verbindungsrohrs 6 wahlweise mit einem in Fig. 5 dargestellten Eingang 22 eines Rücklaufleitungsabschnitts 24 oder mit der Eintrittsöffnung 8 des vorlaufseitigen Verbindungsrohrs 4 eines weiteren erfindungsgemäßen Wärmetauscherelements 1 gelenkig fluidisch verbindbar.

Die Eintrittsöffnung 8 des vorlaufseitigen Verbindungsrohrs 4 ist wahlweise mit einem in Fig. 5 dargestellten Ausgang 26 eines Vorlaufleitungsabschnitts 28 oder mittels des Kupplungselements 20 mit der Austrittsöffnung 18 des rücklaufseitigen Verbindungsrohrs 6 eines weiteren Wärmetauscherelements 1 gelenkig fluidisch verbindbar.

An der Außenseite des Oberschalenabschnitts 30 der Wärmetauscherkammer 2 sind in einem wabenartigen Muster halbkugelförmige Erhebungen 32 ausgebildet, die ein Anhaften von Schmutz und so die Bildung einer sogenannten Sielhaut an der Außenseite des Oberschalenabschnitts 30 verhindern sollen. Der Oberschalenabschnitt 30 begrenzt die Wärmetauscherkammer 2 nach oben, wobei ein in Fig. 10 gezeigter Unterschalenabschnitt 54 die Wärmetauscherkammer 2 nach unten begrenzt. Der Oberschalenabschnitt 30 und der Unterschalenabschnitt 54 können als separate Bauteile ausgebildet und miteinander fluidisch verbunden, insbesondere miteinander verschweißt oder verklebt sein. Bei dem aus Edelstahl hergestellten Oberschalenabschnitt 30 können die halbkugelförmigen Erhebungen 32 mittels einer Prägetechnik oder Gesenkschmiedetechnik erzeugt und damit einstückig mit dem Oberschalenabschnitt 30 ausgebildet sein.

An dem in Abwasserfließrichtung AR gesehen stromauf ausgebildeten Endabschnitt des rücklaufseitigen Verbindungsrohrs 6 ist ein Niederhalter 34 ausgebildet. An dem vorlaufseitigen VS in Abwasserfließrichtung AR gesehen stromauf ausgebildeten Endabschnitt der Wärmetauscherkammer 2 und an dem rücklaufseitigen RS in Abwasserfließrichtung AR gesehen stromab ausgebildeten Endabschnitt der Wärmetauscherkammer 2 sind Angriffsflächen 36 für den Niederhalter 34 ausgebildet. Der Niederhalter 34 ist detailliert in Fig. 10 und Fig. 11 gezeigt. Die Angriffsflächen 36 sind auch in Fig. 5 gezeigt.

Das in **Fig. 5** in der Draufansicht gezeigte Wärmetauschermodul 38 gemäß einem Ausführungsbeispiel der Erfindung weist mehrere Wärmetauscherelemente 1 gemäß Fig. 4 auf.

Die Eintrittsöffnung 8 des vorlaufseitigen Verbindungsrohrs 4 des ersten vorlaufseitigen Wärmetauscherelements 1 ist mit dem Ausgang 26 des Vorlaufleitungsabschnitts 28 starr fluidisch verbunden. Zusätzlich dazu kann diese Verbindung zugfest ausgebildet sein.

Alternativ dazu kann die Eintrittsöffnung 8 des vorlaufseitigen Verbindungsrohrs 4 des - in Breitenrichtung BR gesehen - ersten vorlaufseitigen Verbindungsrohrs 4 mit dem Ausgang 26 des Vorlaufleitungsabschnitts 28 gelenkig fluidisch verbunden sein. Zusätzlich dazu kann diese Verbindung zugfest ausgebildet sein.

Die jeweiligen Austrittsöffnungen 18 der rücklaufseitigen Verbindungsrohre 6 der weiteren Wärmetauscherelemente 1 sind über die in Fig. 4 gezeigten Kupplungselemente 20 mit den Eintrittsöffnungen 8 der vorlaufseitigen Verbindungsrohre 4 der in Breitenrichtung BR angrenzenden Wärmetauscherelemente 1 zugfest und gelenkig fluidisch verbunden.

Die Austrittsöffnung 18 des rücklaufseitigen Verbindungsrohrs 6 des letzten rücklaufseitigen Wärmetauscherelements 1 ist mit dem Eingang 22 des Rücklaufleitungsabschnitts 24 starr fluidisch verbunden. Das in Fig. 4 gezeigte Kupplungselement 20 ist dazu an dem rücklaufseitigen Verbindungsrohrs 6 des letzten rücklaufseitigen Wärmetauscherelements 1 weggelassen. Zusätzlich dazu kann diese Verbindung zugfest ausgebildet sein.

Alternativ dazu kann die Austrittsöffnung 18 des rücklaufseitigen Verbindungsrohrs 6 des - in Breitenrichtung BR gesehen - letzten rücklaufseitigen Wärmetauscherelements 1 mit dem Eingang 22 des Rücklaufleitungsabschnitts 24 gelenkig fluidisch verbunden sein, insbesondere mittels des Kupplungselements 20. Zusätzlich dazu kann diese Verbindung zugfest ausgebildet sein.

An dem jeweiligen Endabschnitt des Vorlaufleitungsabschnitts 28 und des Rücklaufleitungsabschnitts 24 ist jeweils ein Verbindungselement 40 vorgesehen, mittels dem ein jeweiliger Vorlaufleitungsabschnitt 28 bzw. Rücklaufleitungsabschnitt 24 eines weiteren Wärmetauschermoduls 38 zugfest und fluidisch verbindbar ist.

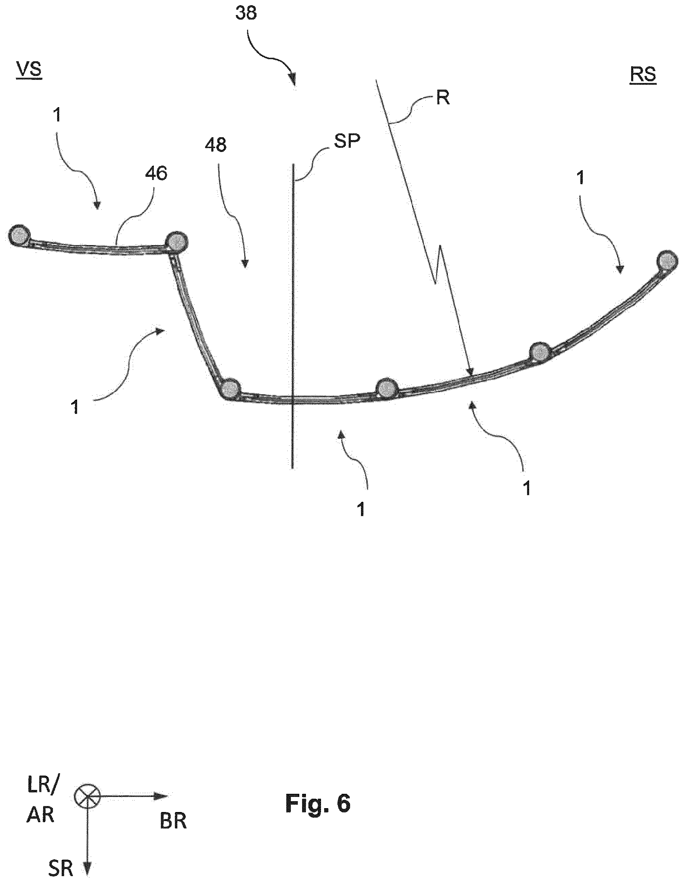

**Fig. 6** zeigt ein Wärmetauschermodul 38 gemäß Fig. 5 in der Vorderansicht, das fünf gleiche Wärmetauscherelemente 1 aufweist. Der Vorlaufleitungsabschnitt 28 und der Rücklaufleitungsabschnitt 24 sind nicht dargestellt.

Der linke Bildabschnitt (auf der Vorlaufseite VS der Spiegelachse SP) zeigt eine erste Anpassungsmöglichkeit an einen Abwasserrohrleitungsquerschnitt:
Mit dem Wärmetauscherelement 1 an dem vorlaufseitigen (auf der Vorlaufseite VS) freien Ende des Wärmetauschermoduls 38 kann eine Ablauffläche, eine sogenannten Berme 46, ausgebildet sein. Daran anschließend kann mit weiteren Wärmetauscherelementen 1 eine Einlaufrinne 48 in Form einer Ausmuldung ausgebildet sein. Die vollständige erste Anpassungsmöglichkeit ist ab hier in Richtung zur Rücklaufseite RS spiegelsymmetrisch zur Schwerkraftrichtung SR ausgebildet, wobei die Spiegelachse SP etwa durch den senkrechten Strich angedeutet ist.

Der rechte Bildabschnitt (auf der Rücklaufseite RS der Spiegelachse SP) zeigt eine zweite Anpassungsmöglichkeit an einen Abwasserrohrleitungsquerschnitt:
Mit den drei gezeigten Wärmetauscherelementen 1 ist ein Radius R einer Innenwandung einer nicht dargestellten Abwasserrohrleitung derart nachgebildet, dass das Wärmetauschermodul 38 vorteilhafterweise darauf aufliegt oder lediglich einen geringen Abstand dazu aufweist. Hierzu weisen die einzelnen Wärmetauscherelemente 1 eine in Fig. 10 gezeigte und beschriebene Wölbung 52 auf. Die vollständige zweite Anpassungsmöglichkeit ist ab hier in Richtung zur Vorlaufseite VS spiegelsymmetrisch zur Schwerkraftrichtung SR ausgebildet, wobei die Spiegelachse SP etwa durch den senkrechten Strich angedeutet ist.

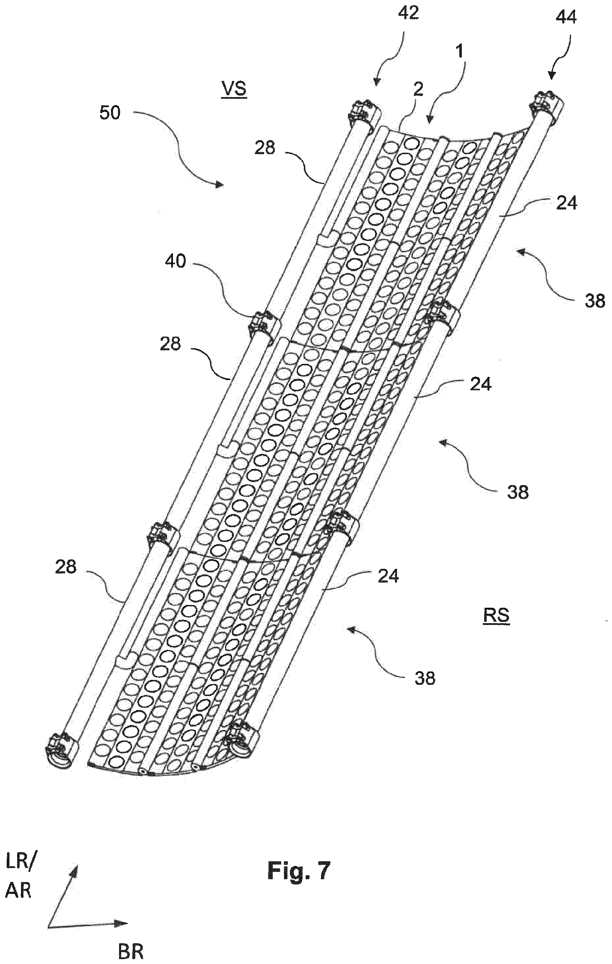

**Fig. 7** zeigt eine räumliche Ansicht eines Wärmetauschersystems 50 mit drei Wärmetauschermodulen 38 gemäß Fig. 5.

Die in Fig. 10 gezeigte Wölbung 52 der Wärmetauscherelemente 1 verläuft quer zu der Hauptdurchströmungsrichtung des Wärmetauscherfluids in der Wärmetauscherkammer 2, die etwa entgegen der Abwasserfließrichtung AR verläuft.

Die mittels Verbindungselementen 40 miteinander fluidisch verbundenen Vorlaufleitungsabschnitte 28 bzw. Rücklaufleitungsabschnitte 24 bilden eine Vorlaufleitung 42 bzw. eine Rücklaufleitung 44.

Eine Trennfuge zwischen den in Längsrichtung LR aneinander angrenzenden Wärmetauscherelementen 1 bzw. Wärmetauscherkammern 2 der Wärmetauschermodule 38 kann mittels geeigneten Dichtmaterialien abgedichtet sein.

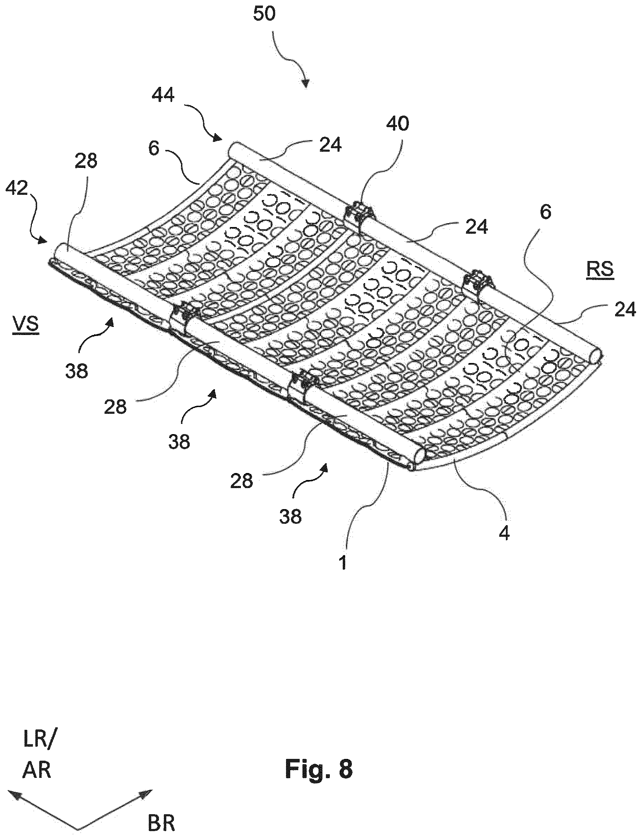

**Fig. 8** zeigt eine räumliche Ansicht eines Wärmetauschersystems 50 mit drei Wärmetauschermodulen 38, die jeweils drei Wärmetauscherelemente 1 gemäß Fig. 4 in Quereinbaulage enthalten.

Die gezeigten Wärmetauscherelemente 1 sind ähnlich wie die in Fig. 4 gezeigten mit Verbindungsrohren 4, 6 ausgebildet. Im Unterschied zu dem in Fig. 7 gezeigten Wärmetauschersystem 50 verläuft die Wölbung 52 der Wärmetauscherelemente 1 in der Hauptdurchströmungsrichtung des Wärmetauscherfluids in der Wärmetauscherkammer 2, also etwa in Breitenrichtung BR.

Ansonsten sind die für das Wärmetauschersystem 50 in Fig. 7 beschriebenen Merkmale auch für das in Fig. 8 gezeigte Wärmetauschersystem 50 zutreffend.

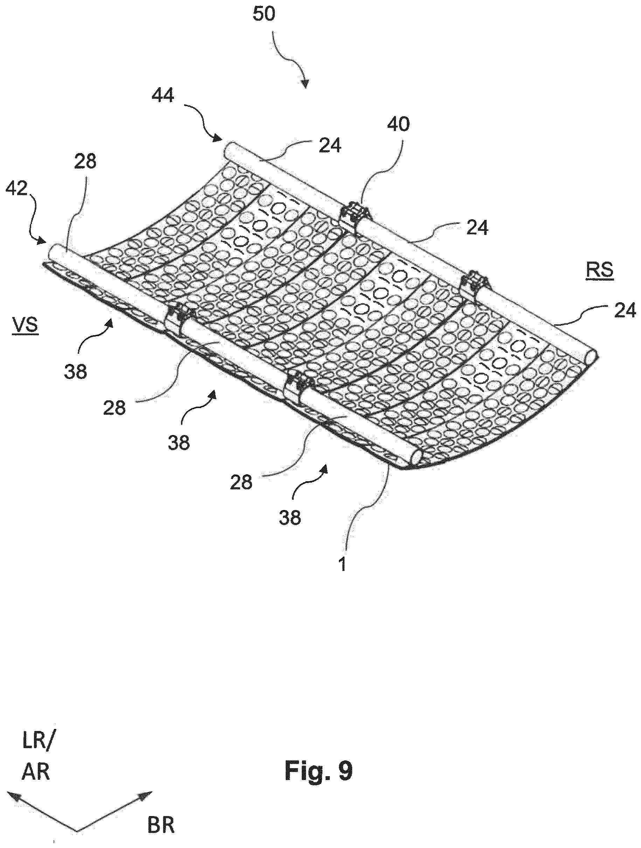

**Fig. 9** zeigt eine räumliche Ansicht eines Wärmetauschersystems 50 mit drei Wärmetauschermodulen 38 gemäß Fig. 3.

Im Unterschied zu dem in Fig. 8 gezeigten Wärmetauschersystem 50 sind die hier verwendeten Wärmetauscherelemente 1 ohne Verbindungsrohre 4, 6 ausgebildet.

Ansonsten sind die für das Wärmetauschersystem 50 in Fig. 8 beschriebenen Merkmale auch für das in Fig. 9 gezeigte Wärmetauschersystem 50 zutreffend.

**Fig. 10** zeigt eine Vorderansicht des Wärmetauschermoduls 38 gemäß Fig. 5 mit drei Wärmetauscherelementen 1.

Zusätzlich zu den in Fig. 5 beschriebenen Merkmalen des Wärmetauschermoduls 38 ist hier die Wölbung 52 der Wärmetauscherelemente 1 gezeigt. Die Wölbung 52 ist nach dem jeweiligen Querschnitt der Abwasserrohrleitung dimensioniert. Beispielsweise kann die Wölbung 52 für eine Abwasserrohrleitung mit dem Innenwanddurchmesser von 2.000 mm einen Radius R von 1.000 mm aufweisen.

Die hier an dem in Abwasserfließrichtung AR gesehen stromaufseitigen Endabschnitt der Wärmetauscherelemente 1 vorgesehenen Niederhalter 34 sind an dem in Abwasserfließrichtung AR gesehen stromaufseitigen Endabschnitt des jeweils rücklaufseitigen Verbindungsrohrs 6 ausgebildet.

Das Detail Y aus Fig. 10 ist in **Fig. 11** vergrößert dargestellt und zeigt Einzelheiten des Niederhalters 34.

Der Niederhalter 34 ist als konzentrisch zu dem Verbindungsrohr 6 befestigter Arm 56 ausgebildet. Der Arm 56 steht etwa in Breitenrichtung BR von dem Verbindungsrohr 6 ab und kontaktiert die Angriffsfläche 36 an dem rücklaufseitig RS angrenzenden Wärmetauscherelement 1. Der Niederhalter 34 schließt mit der Breitenrichtung BR einen Winkel 58 ein. Die Winkellage des Niederhalters 34 ist mit einer als Klemmschraube 60 ausgebildeten Klemmvorrichtung fixiert, um den Winkel 58 konstant zu halten und das jeweils rücklaufseitig RS angrenzende Wärmetauscherelement 1 an einer Bewegung, insbesondere Verschwenkung, nach oben zu hindern.

An dem in Abwasserfließrichtung AR gesehen stromabseitigen Endabschnitt des jeweiligen Wärmetauscherelements 1 ist der Niederhalter 34 an dem in Abwasserfließrichtung AR gesehen stromabseitigen Endabschnitt des jeweiligen vorlaufseitigen Verbindungsrohrs 4 ausgebildet und drückt auf die an dem vorlaufseitig VS angrenzenden Wärmetauscherelement 1 ausgebildete Angriffsfläche 36, die auch in Fig. 4 und Fig. 5 gezeigt ist.

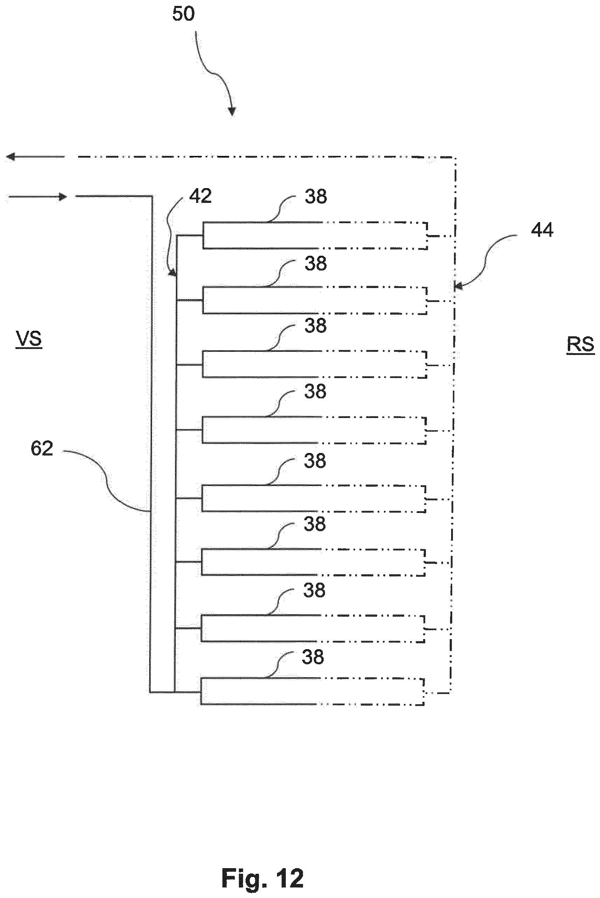

In **Fig. 12** ist eine schematische Prinzipdarstellung des Tichelmann-Systems gezeigt.

Die kältere Vorlaufseite ist mit durchgezogenen Linien dargestellt und die wärmere Rücklaufseite ist mit strich-zwei-punktierten Linien dargestellt. Eine Pumpe und eine Wärmetauschereinrichtung zum Nutzen der Wärme in der Rücklaufseite ist weggelassen.

Beim Tichelmann-System (Tichelmannsche Rohrführung) in einer Heizanlage werden üblicherweise die Rohre vom Wärmeerzeuger (z. B. Heizkessel, Solaranlage) zum Wärmeverbraucher (z. B. Heizkörper, Warmwasserspeicher) und zurück in Ringverlegung so geführt, dass die Summe der Längen von Vorlaufleitung und Rücklaufleitung bei jedem Heizkörper etwa gleich ist. Heizkörper mit kurzem Vorlauf haben eine lange Rücklaufleitung und umgekehrt. Der Sinn dabei ist, dass alle Heizkörper etwa gleichen Druckverlusten ausgesetzt sind und sich damit gleiche Volumenströme = gleiche Wärmeströme in den Heizkörpern einstellen, auch wenn keine Regelventile verwendet werden. Dies bewirkt ein gleichmäßiges Erwärmen auch von weiter entfernt gelegenen Heizkörpern. Eine Anbindung nach "Tichelmann" bedeutet auch, dass die zeta-Werte (Druckverlustbeiwerte) der Formstücke der Rohrleitung zum Anschluss mehrerer gleicher Komponenten (in der Regel Warmwasserspeicher oder Sonnenkollektoren) in der Summe je Einzelkomponente gleich sind, damit eine gleichmäßige Durchströmung gewährleistet ist (Quelle: Wikipedia https:/Ide.wikipedia.org/wikilTichelmann-System).

Übertragen auf das erfindungsgemäße Wärmetauschersystem 50 sind die Wärmetauschermodule 38 mit einer sogenannten "Tichelmann-Leitung" 62 angeschlossen, wodurch ein Einspeisedruck des Wärmetauscherfluids in die Wärmetauschermodule 38 jeweils etwa gleich groß gehalten werden kann, ohne Regelventile vorzusehen. Wie schon erwähnt, ist damit eine gleichmäßige Durchströmung und damit ein gleichmäßiger Wärmeübergang von dem Abwasser zu dem Wärmetauscherfluid in den einzelnen Wärmetauschermodulen 38 gewährleistet.

Die Tichelmann-Leitung 62 ist in den anderen Figuren nicht dargestellt.

### Bezugszeichenliste

- 1: Wärmetauscherelement
- 2: Wärmetauscherkammer
- 4: vorlaufseitiges Verbindungsrohr
- 6: rücklaufseitiges Verbindungsrohr
- 8: Eintrittsöffnung des vorlaufseitigen Verbindungsrohrs
- 10: Auslauf des vorlaufseitigen Verbindungsrohrs
- 12: Einlauf der Wärmetauscherkammer
- 14: Auslauf der Wärmetauscherkammer
- 16: Einlauf des rücklaufseitigen Verbindungsrohrs
- 18: Austrittsöffnung des rücklaufseitigen Verbindungsrohrs
- 20: Kupplungselement
- 22: Eingang des Rücklaufleitungsabschnitts
- 24: Rücklaufleitungsabschnitt
- 26: Ausgang des Vorlaufleitungsabschnitts
- 28: Vorlaufleitungsabschnitt
- 30: Oberschalenabschnitt
- 32: Erhebung
- 34: Niederhalter
- 36: Angriffsfläche für den Niederhalter
- 38: Wärmetauschermodul
- 40: Verbindungselement
- 42: Vorlaufleitung
- 44: Rücklaufleitung
- 46: Berme
- 48: Einlaufrinne
- 50: Wärmetauschersystem
- 52: Wölbung
- 54: Unterschalenabschnitt
- 56: Arm
- 58: Winkel
- 60: Klemmschraube
- 62: Tichelmann-Leitung
- AR: Abwasserfließrichtung
- BR: Breitenrichtung
- LR: Längsrichtung
- R: Radius
- RS: Rücklaufseite; rücklaufseitig
- SP: Spiegelachse
- SR: Schwerkraftrichtung
- VS: Vorlaufseite; vorlaufseitig

## Patentansprüche

1. Wärmetauscherelement (1) insbesondere zum Einbringen in eine sich entlang einer Längsrichtung (LR) erstreckende Abwasserrohrleitung, mit
einer Wärmetauscherkammer (2) zur Aufnahme eines Wärmetauscherfluids, die einen Oberschalenabschnitt (30) und einen davon beabstandeten Unterschalenabschnitt (54) aufweist,
wobei eine Außenseite des Oberschalenabschnitts (30) dafür ausgelegt ist, zumindest abschnittsweise mit Abwasser in Kontakt zu kommen, um Wärme von dem Abwasser aufzunehmen und wobei eine Innenseite des Oberschalenabschnitts (30) dafür ausgelegt ist, zumindest abschnittsweise mit dem Wärmetauscherfluid in Kontakt zu kommen, um die Wärme an das Wärmetauscherfluid abzugeben,
wobei ein Einlauf (12) der Wärmetauscherkammer (2) mit einem Ausgang (26) eines Vorlaufleitungsabschnitts (28) und ein Auslauf (14) der Wärmetauscherkammer (2) mit einem Eingang (22) eines Rücklaufleitungsabschnitts (24) fluidisch verbindbar ist und
wobei der Einlauf (12) der Wärmetauscherkammer (2) wahlweise mit einem Auslauf (14) einer Wärmetauscherkammer (2) eines weiteren Wärmetauscherelements (1) und der Auslauf (14) der Wärmetauscherkammer (2) wahlweise mit einem Einlauf (12) einer Wärmetauscherkammer (2) eines weiteren Wärmetauscherelements (1) fluidisch verbindbar ist, ferner mit
einem vorlaufseitigen Verbindungsrohr (4), das vorlaufseitig (VS) an der Wärmetauscherkammer (2) vorgesehen ist und dessen Auslauf (10) mit dem Einlauf (12) der Wärmetauscherkammer (2) fluidisch verbunden ist und
einem rücklaufseitigen Verbindungsrohr (6), das rücklaufseitig (RS) an der Wärmetauscherkammer (2) vorgesehen ist und dessen Einlauf (16) mit dem Auslauf (14) der Wärmetauscherkammer (2) fluidisch verbunden ist, wobei
eine Eintrittsöffnung (8) des vorlaufseitigen Verbindungsrohrs (4) mit dem Ausgang (26) des Vorlaufleitungsabschnitts (28) oder mit der Austrittsöffnung (18) des rücklaufseitigen Verbindungsrohrs (6) des weiteren Wärmetauscherelements (1) fluidisch verbindbar ist und
wobei eine Austrittsöffnung (18) des rücklaufseitigen Verbindungsrohrs (6) mit dem Eingang (22) des Rücklaufleitungsabschnitts (24) oder mit der Eintrittsöffnung (8) des vorlaufseitigen Verbindungsrohrs (4) des weiteren Wärmetauscherelements (1) fluidisch verbindbar ist, wobei
die Eintrittsöffnung (8) des vorlaufseitigen Verbindungsrohrs (4) mit der Austrittsöffnung (18) des rücklaufseitigen Verbindungsrohrs (6) des weiteren Wärmetauscherelements (1) gelenkig fluidisch verbindbar ist und/oder
die Austrittsöffnung (18) des rücklaufseitigen Verbindungsrohrs (6) mit der Eintrittsöffnung (8) des vorlaufseitigen Verbindungsrohrs (4) des weiteren Wärmetauscherelements (1) gelenkig fluidisch verbindbar ist,
um eine gegenseitige Verschwenkbarkeit des Wärmetauscherelements (1) und des weiteren Wärmetauscherelements (1) um eine Mittelachse des jeweiligen Verbindungsrohrs (4, 6) vorzusehen.

2. Wärmetauscherelement (1) nach Anspruch 1, wobei die Verbindungsrohre (4, 6) in einer Draufsicht auf die Wärmetauscherkammer (2) gesehen punktsymmetrisch zu einem Flächenschwerpunkt der Wärmetauscherkammer (2) ausgebildet sind und wobei eine Erstreckung der Verbindungsrohre (4, 6) in Längsrichtung (LR) zusammengenommen im Wesentlichen einer Erstreckung der Wärmetauscherkammer (2) in Längsrichtung (LR) entspricht und/oder wobei der Einlauf (12) und der Auslauf (14) der Wärmetauscherkammer (2) in einer Draufsicht auf die Wärmetauscherkammer (2) gesehen punktsymmetrisch zu einem Flächenschwerpunkt der Wärmetauscherkammer (2) ausgebildet sind.

3. Wärmetauscherelement (1) nach Anspruch 1 oder 2, wobei in der Draufsicht auf das Wärmetauscherelement (1) und bezüglich einer Abwasserfließrichtung (AR) gesehen
die Eintrittsöffnung (8) des vorlaufseitigen Verbindungsrohrs (4) stromauf des Auslaufs (10) des vorlaufseitigen Verbindungsrohrs (4) ausgebildet ist,
der vorlaufseitige Einlauf (12) der Wärmetauscherkammer (2) stromab des rücklaufseitigen Auslaufs (14) der Wärmetauscherkammer (2) ausgebildet ist und
der Einlauf (16) des rücklaufseitigen Verbindungsrohrs (6) stromauf der Austrittsöffnung (18) des rücklaufseitigen Verbindungsrohrs (6) ausgebildet ist und/oder
wobei in der Draufsicht auf das Wärmetauscherelement (1) und bezüglich einer Abwasserfließrichtung (AR) gesehen der vorlaufseitige Einlauf (12) der Wärmetauscherkammer (2) stromab des rücklaufseitigen Auslaufs (14) der Wärmetauscherkammer (2) ausgebildet ist.

4. Wärmetauscherelement (1) nach einem der vorherigen Ansprüche, wobei die Wärmetauscherkammer (2) eine in der Draufsicht auf die Wärmetauscherkammer (2) gesehen konkave Wölbung (52) aufweist.

5. Wärmetauschermodul (38) mit einem Wärmetauscherelement (1) nach einem der vorherigen Ansprüche, wobei der Vorlaufleitungsabschnitt (28) vorlaufseitig (VS) an der Wärmetauscherkammer (2) ausgebildet ist und der Rücklaufleitungsabschnitt (24) rücklaufseitig (RS) an der Wärmetauscherkammer (2) ausgebildet ist, wobei
der Einlauf (12) der Wärmetauscherkammer (2) mit dem Ausgang (26) des Vorlaufleitungsabschnitts (28) fluidisch verbunden ist und der Auslauf (14) der Wärmetauscherkammer (2) mit dem Eingang (22) des Rücklaufleitungsabschnitts (24) fluidisch verbunden ist oder wobei
die Eintrittsöffnung (8) des vorlaufseitigen Verbindungsrohrs (4) mit dem Ausgang (26) des Vorlaufleitungsabschnitts (28) fluidisch verbunden ist und die Austrittsöffnung (18) des rücklaufseitigen Verbindungsrohrs (6) mit dem Eingang (22) des Rücklaufleitungsabschnitts (24) fluidisch verbunden ist.

6. Wärmetauschermodul (38) nach Anspruch 5, wobei
das Wärmetauscherelement (1) derart in Längseinbaulage ausgerichtet ist, dass eine Hauptdurchströmungsrichtung des Wärmetauscherfluids in der Wärmetauscherkammer (2) etwa in Längsrichtung (LR) ausgerichtet ist oder
das Wärmetauscherelement (1) derart in Quereinbaulage ausgerichtet ist, dass eine Hauptdurchströmungsrichtung des Wärmetauscherfluids in der Wärmetauscherkammer (2) etwa in Breitenrichtung (BR) ausgerichtet ist.

7. Wärmetauschermodul (38) nach Anspruch 5 oder 6, wobei der Vorlaufleitungsabschnitt (28) entlang der vorlaufseitigen (VS) Längsseite der Wärmetauscherkammer (2) ausgebildet ist und der Rücklaufleitungsabschnitt (24) entlang der rücklaufseitigen (RS) Längsseite der Wärmetauscherkammer (2) ausgebildet ist.

8. Wärmetauschermodul (38) nach Anspruch 7, wobei eine jeweilige Erstreckung des Vorlaufleitungsabschnitts (28) und des Rücklaufleitungsabschnitts (24) in Längsrichtung (LR) im Wesentlichen der Erstreckung der Wärmetauscherkammer (2) in Längsrichtung (LR) entspricht.

9. Wärmetauschermodul (38) nach einem der vorherigen Ansprüche 5 bis 8, wobei
der mit dem jeweiligen Verbindungsrohr (4, 6) fluidisch verbundene Vorlaufleitungsabschnitt (28) und/oder Rücklaufleitungsabschnitt (24) um eine Mittelachse des Verbindungsrohrs (4, 6) verschwenkbar sind/ist, um eine Erstreckung des Wärmetauschermoduls (38) in Breitenrichtung (BR) zu verändern oder wobei
der mit dem Einlauf (12) der Wärmetauscherkammer (2) fluidisch verbundene Vorlaufleitungsabschnitt (28) und/oder der mit dem Auslauf (14) der Wärmetauscherkammer (2) fluidisch verbundene Rücklaufleitungsabschnitt (24) starr fluidisch miteinander verbunden sind/ist.

10. Wärmetauschermodul (38) nach einem der vorherigen Ansprüche 5 bis 9 mit mehreren Wärmetauscherelementen (1), wobei
das jeweils vorlaufseitige Wärmetauscherelement (1) mit dem jeweils bezüglich dazu rücklaufseitigen (RS) Wärmetauscherelement (1) derart fluidisch verbunden ist, dass die Austrittsöffnung (18) des rücklaufseitigen Verbindungsrohrs (6) des vorlaufseitigen Wärmetauscherelements (1) zugfest und in Bezug auf das Wärmetauscherfluid dicht mit der Eintrittsöffnung (8) des vorlaufseitigen Verbindungsrohrs (4) des rücklaufseitigen Wärmetauscherelements (1) fluidisch verbunden ist und/oder
wobei die in Breitenrichtung (BR) aneinander angrenzenden Wärmetauscherelemente (1) zueinander um eine Mittelachse der Verbindungsrohre (4, 6) verschwenkbar sind, um eine Erstreckung des Wärmetauscherelements (1) in Breitenrichtung (BR) zu verändern.

11. Wärmetauschermodul (38) nach Anspruch 10, wobei an mindestens einem Wärmetauscherelement (1) ein Niederhalter (34) vorgesehen ist, der das angrenzende Wärmetauscherelement (1) gegen eine Bewegung entgegen der Schwerkraftrichtung (SR) sichert.

12. Wärmetauschersystem (50) aus mehreren in Längsrichtung (LR) hintereinander angeordneten Wärmetauschermodulen (38) nach einem der vorherigen Ansprüche 5 bis 11, wobei eine Vorlaufleitung (42) und eine Rücklaufleitung (44) des Wärmetauschersystems (50) mittels zugfester und in Bezug auf das Wärmetauscherfluid dichter Fluidverbindung der jeweils in Längsrichtung (LR) aneinander angrenzenden Vorlaufleitungsabschnitte (28) und Rücklaufleitungsabschnitte (24) ausgebildet sind.

## Claims

1. A heat exchanger element (1), in particular for inserting into a wastewater pipeline extending in a longitudinal direction (LR), comprising
a heat exchanger chamber (2) for receiving a heat exchanger fluid, said chamber having an upper shell portion (30) and a lower shell portion (54) distanced therefrom,
wherein an outer side of the upper shell portion (30) is configured so as to come into contact with wastewater, at least in portions, in order to absorb heat from the wastewater, and wherein an inner side of the upper shell portion (30) is configured so as to come into contact with the heat exchanger fluid, at least in portions, in order to emit the heat to the heat exchanger fluid,
wherein an inflow (12) of the heat exchanger chamber (2) is fluidically connectable to an outlet (26) of a feed line portion (28) and an outflow (14) of the heat exchanger chamber (2) is fluidically connectable to an inlet (22) of a return line portion (24), and
wherein the inflow (12) of the heat exchanger chamber (2) is fluidically connectable selectively to an outflow (14) of a heat exchanger chamber (2) of a further heat exchanger element (1) and the outflow (14) of the heat exchanger chamber (2) is fluidically connectable selectively to an inflow (12) of a heat exchanger chamber (2) of a further heat exchanger element (1), further comprising
a feed-side connection pipe (4), which is provided on the feed side (VS) on the heat exchanger chamber (2) and the outflow (10) of which is fluidically connected to the inflow (12) of the heat exchanger chamber (2), and
a return-side connection pipe (6), which is provided on the return side (RS) on the heat exchanger chamber (2) and the inflow (16) of which is fluidically connected to the outflow (14) of the heat exchanger chamber (2), wherein
an entry opening (8) of the feed-side connection pipe (4) is fluidically connectable to the outlet (26) of the feed line portion (28) or to the exit opening (18) of the return-side connection pipe (6) of the further heat exchanger element (1), and
wherein an exit opening (18) of the return-side connection pipe (6) is fluidically connectable to the inlet (22) of the return-line portion (24) or to the inlet opening (8) of the feed-side connection pipe (4) of the further heat exchanger element (1), wherein
the entry opening (8) of the feed-side connection pipe (4) is fluidically connectable articulatedly to the exit opening (18) of the return-side connection pipe (6) of the further heat exchanger element (1) and/or
the exit opening (18) of the return-side connection pipe (6) is fluidically connectable articulatedly to the entry opening (8) of the feed-side connection pipe (4) of the further heat exchanger element (1),
in order to provide a mutual pivotability of the heat exchanger element (1) and the further heat exchanger element (1) about a centre axis of the corresponding connection pipe (4, 6).

2. The heat exchanger element (1) according to claim 1, wherein the connection pipes (4, 6) are formed point-symmetrically with respect to a centre of an area of the heat exchanger chamber (2) as considered in a plan view of the heat exchanger chamber (2), and wherein an extent of the connection pipes (4, 6) in the longitudinal direction (LR), considered together, corresponds substantially to an extent of the heat exchanger chamber (2) in the longitudinal direction (LR), and/or
wherein the inflow (12) and the outflow (14) of the heat exchanger chamber are formed point-symmetrically with respect to a centre of an area of the heat exchanger chamber (2) as considered in a plan view of the heat exchanger chamber (2).

3. The heat exchanger element (1) according to claim 1 or 2, wherein, as considered in a plan view of the heat exchanger element (1) and with respect to a wastewater flow direction (AR),
the entry opening (8) of the feed-side connection pipe (4) is formed upstream of the outflow (10) of the feed-side connection pipe (4),
the feed-side inflow (12) of the heat exchanger chamber (2) is formed downstream of the return-side outflow (14) of the heat exchanger chamber (2), and
the inflow (16) of the return-side connection pipe (6) is formed upstream of the exit opening (18) of the return-side connection pipe (6), and/or
wherein, as considered in a plan view of the heat exchanger element (1) and with respect to a wastewater flow direction (AR), the feed-side inflow (12) of the heat exchanger chamber (2) is formed downstream of the return-side outflow (14) of the heat exchanger chamber (2).

4. The heat exchanger element (1) according to any one of the preceding claims, wherein the heat exchanger chamber (2) has a concave curvature (52) as considered in a plan view of the heat exchanger chamber (2).

5. A heat exchanger module (38) comprising a heat exchanger element (1) according to any one of the preceding claims, wherein the feed line portion (28) is formed on the feed side (VS) on the heat exchanger chamber (2) and the return line portion (24) is formed on the return side (RS) on the heat exchanger chamber (2), wherein
the inflow (12) of the heat exchanger chamber (2) is fluidically connected to the outlet (26) of the feed line portion (28) and the outflow (14) of the heat exchanger chamber (2) is fluidically connected to the inlet (22) of the return line portion (24), or wherein
the entry opening (8) of the feed-side connection pipe (4) is fluidically connected to the outlet (26) of the feed line portion (28) and the exit opening (18) of the return-side connection pipe (6) is fluidically connected to the inlet (22) of the return line portion (24).

6. The heat exchanger module (38) according to claim 5, wherein
the heat exchanger element (1) is oriented in the longitudinal installation position in such a way that a main throughflow direction of the heat exchanger fluid in the heat exchanger chamber (2) is oriented approximately in the longitudinal direction (LR) or
the heat exchanger element (1) is oriented in the transverse installation position in such a way that a main throughflow direction of the heat exchanger fluid in the heat exchanger chamber (2) is oriented approximately in the width direction (BR).

7. The heat exchanger module (38) according to claim 5 or 6, wherein the feed line portion (28) is formed along the feed-side (VS) longitudinal side of the heat exchanger chamber (2) and the return line portion (24) is formed along the return-side (RS) longitudinal side of the heat exchanger chamber (2).

8. The heat exchanger module (38) according to claim 7, wherein a respective extent of the feed line portion (28) and of the return line portion (24) in the longitudinal direction (LR) corresponds substantially to the extent of the heat exchanger chamber (2) in the longitudinal direction (LR).

9. The heat exchanger module (38) according to any one of preceding claims 5 to 8, wherein
the feed line portion (28) and/or return line portion (24) fluidically connected to the respective connection pipe (4, 6) are/is pivotable about a centre axis of the connection pipe (4, 6) in order to change an extent of the heat exchanger module (38) in the width direction (BR), or wherein
the feed line portion (28) fluidically connected to the inflow (12) of the heat exchanger chamber (2) and/or the return line portion (24) fluidically connected to the outflow (14) of the heat exchanger chamber (2) are/is fluidically connected to one another rigidly.

10. The heat exchanger module (38) according to any one of preceding claims 5 to 9 comprising a plurality of heat exchanger elements (1), wherein
in each case the feed-side heat exchanger element (1) is fluidically connected to the heat exchanger element (1) that, relative thereto, is on the return side (RS), in such a way that the outlet opening (18) of the return-side connection pipe (6) of the feed-side heat exchanger element (1) is fluidically connected tension-resistantly and, in respect of the heat exchanger fluid, tightly to the entry opening (8) of the feed-side connection pipe (4) of the return-side heat exchanger element (1) and/or
wherein the heat exchanger elements (1) bordering one another in the width direction (BR) are pivotable relative to one another about a centre axis of the connection pipes (4, 6) in order to change the extent of the heat exchanger element (1) in the width direction (BR).

11. The heat exchanger module (38) according to claim 10, wherein a hold-down means (34) is provided on at least one heat exchanger element (1) and secures the bordering heat exchanger element (1) against movement against the direction of gravity (SR).

12. A heat exchanger system (50) formed of a plurality of heat exchanger modules (38) according to any one of preceding claims 5 to 11 arranged in succession in the longitudinal direction (LR), wherein a feed line (42) and a return line (44) of the heat exchanger system (50) are formed by means of a tension-resistant and, in respect of the heat exchanger fluid, tight fluid connection of the feed line portions (28) and return line portions (24) bordering one another in the longitudinal direction (LR).

## Revendications

1. Élément échangeur de chaleur (1), notamment pour l'introduction dans une conduite d'eaux usées s'étendant le long d'une direction longitudinale (LR), avec
une chambre d'échangeur de chaleur (2) pour recevoir un fluide échangeur de chaleur, qui présente une section de coque supérieure (30) et une section de coque inférieure (54) espacée de celle-ci,
un côté extérieur de la section de coque supérieure (30) étant conçu pour être au moins par sections en contact avec des eaux usées afin de recevoir de la chaleur des eaux usées et un côté intérieur de la section de coque supérieure (30) étant conçu pour être au moins par sections en contact avec le fluide échangeur de chaleur afin de transférer la chaleur au fluide échangeur de chaleur,
une admission (12) de la chambre d'échangeur de chaleur (2) pouvant être reliée fluidiquement à une sortie (26) d'une section de conduite d'aller (28) et une évacuation (14) de la chambre d'échangeur de chaleur (2) pouvant être reliée fluidiquement à une entrée (22) d'une section de conduite de retour (24) et
l'admission (12) de la chambre d'échangeur de chaleur (2) pouvant être reliée fluidiquement au choix à une évacuation (14) d'une chambre d'échangeur de chaleur (2) d'un autre élément échangeur de chaleur (1) et l'évacuation (14) de la chambre d'échangeur de chaleur (2) pouvant être reliée fluidiquement au choix à une admission (12) d'une chambre d'échangeur de chaleur (2) d'un autre élément échangeur de chaleur (1), en outre avec
un tube de liaison côté aller (4), qui est prévu côté aller (VS) sur la chambre d'échangeur de chaleur (2) et dont l'évacuation (10) est reliée fluidiquement à l'admission (12) de la chambre d'échangeur de chaleur (2) et
un tube de liaison côté retour (6), qui est prévu côté retour (RS) sur la chambre d'échangeur de chaleur (2) et dont l'admission (16) est reliée fluidiquement à l'évacuation (14) de la chambre d'échangeur de chaleur (2), dans lequel
une ouverture d'arrivée (8) du tube de liaison côté aller (4) peut être reliée fluidiquement à la sortie (26) de la section de conduite d'aller (28) ou à l'ouverture d'échappement (18) du tube de liaison côté retour (6) de l'autre élément échangeur de chaleur (1), et
dans lequel une ouverture d'échappement (18) du tube de liaison côté retour (6) peut être reliée fluidiquement à l'entrée (22) de la section de conduite de retour (24) ou à l'ouverture d'arrivée (8) du tube de liaison côté aller (4) de l'autre élément échangeur de chaleur (1), dans lequel
l'ouverture d'arrivée (8) du tube de liaison côté aller (4) peut être reliée fluidiquement de manière articulée à l'ouverture d'échappement (18) du tube de liaison côté retour (6) de l'autre élément échangeur de chaleur (1) et/ou
l'ouverture d'échappement (18) du tube de liaison côté retour (6) peut être reliée fluidiquement de manière articulée à l'ouverture d'arrivée (8) du tube de liaison côté aller (4) de l'autre élément échangeur de chaleur (1),
afin de prévoir une capacité de pivotement mutuel de l'élément échangeur de chaleur (1) et de l'autre élément échangeur de chaleur (1) autour d'un axe central du tube de liaison respectif (4, 6).

2. Élément échangeur de chaleur (1) selon la revendication 1, dans lequel les tubes de liaison (4, 6), vus en plan sur la chambre d'échangeur de chaleur (2), sont réalisés avec une symétrie ponctuelle par rapport à un centre de gravité de surface de la chambre d'échangeur de chaleur (2) et dans lequel une extension des tubes de liaison (4, 6) dans la direction longitudinale (LR) correspond ensemble essentiellement à une extension de la chambre d'échangeur de chaleur (2) dans la direction longitudinale (LR) et/ou dans lequel l'admission (12) et l'évacuation (14) de la chambre d'échangeur de chaleur (2), vues en plan sur la chambre d'échangeur de chaleur (2), sont réalisées avec une symétrie ponctuelle par rapport à un centre de gravité de surface de la chambre d'échangeur de chaleur (2).

3. Élément échangeur de chaleur (1) selon la revendication 1 ou 2, dans lequel, vu de dessus sur l'élément échangeur de chaleur (1) et par rapport à une direction d'écoulement des eaux usées (AR),
l'ouverture d'arrivée (8) du tube de liaison côté aller (4) est réalisée en amont de l'évacuation (10) du tube de liaison côté aller (4),
l'admission côté aller (12) de la chambre d'échangeur de chaleur (2) est réalisée en aval de l'évacuation côté retour (14) de la chambre d'échangeur de chaleur (2) et
l'admission (16) du tube de liaison côté retour (6) est réalisée en amont de l'ouverture d'échappement (18) du tube de liaison côté retour (6), et/ou
dans lequel, vu de dessus sur l'élément échangeur de chaleur (1) et par rapport à une direction d'écoulement des eaux usées (AR), l'admission côté aller (12) de la chambre d'échangeur de chaleur (2) est réalisée en aval de l'évacuation côté retour (14) de la chambre d'échangeur de chaleur (2).

4. Élément échangeur de chaleur (1) selon l'une quelconque des revendications précédentes, dans lequel la chambre d'échangeur de chaleur (2) présente une courbure concave (52) vue en plan sur la chambre d'échangeur de chaleur (2).

5. Module échangeur de chaleur (38) avec un élément échangeur de chaleur (1) selon l'une quelconque des revendications précédentes, dans lequel la section de conduite d'aller (28) est réalisée côté aller (VS) sur la chambre d'échangeur de chaleur (2) et la section de conduite de retour (24) est réalisée côté retour (RS) sur la chambre d'échangeur de chaleur (2), dans lequel
l'admission (12) de la chambre d'échangeur de chaleur (2) est reliée fluidiquement à la sortie (26) de la section de conduite d'aller (28) et l'évacuation (14) de la chambre d'échangeur de chaleur (2) est reliée fluidiquement à l'entrée (22) de la section de conduite de retour (24), ou dans lequel
l'ouverture d'arrivée (8) du tube de liaison côté aller (4) est reliée fluidiquement à la sortie (26) de la section de conduite d'aller (28) et l'ouverture d'échappement (18) du tube de liaison côté retour (6) est reliée fluidiquement à l'entrée (22) de la section de conduite de retour (24).

6. Module échangeur de chaleur (38) selon la revendication 5, dans lequel
l'élément échangeur de chaleur (1) est orienté en position de montage longitudinale de telle sorte qu'une direction principale de passage du fluide échangeur de chaleur dans la chambre d'échangeur de chaleur (2) est orientée approximativement dans la direction longitudinale (LR) ou
l'élément échangeur de chaleur (1) est orienté en position de montage transversale de telle sorte qu'une direction principale de passage du fluide échangeur de chaleur dans la chambre d'échangeur de chaleur (2) est orientée approximativement dans la direction de la largeur (BR).

7. Module échangeur de chaleur (38) selon la revendication 5 ou 6, dans lequel la section de conduite d'aller (28) est réalisée le long du côté longitudinal côté aller (VS) de la chambre d'échangeur de chaleur (2) et la section de conduite de retour (24) est réalisée le long du côté longitudinal côté retour (RS) de la chambre d'échangeur de chaleur (2).

8. Module échangeur de chaleur (38) selon la revendication 7, dans lequel une extension respective de la section de conduite d'aller (28) et de la section de conduite de retour (24) dans la direction longitudinale (LR) correspond essentiellement à l'extension de la chambre d'échangeur de chaleur (2) dans la direction longitudinale (LR).

9. Module échangeur de chaleur (38) selon l'une quelconque des revendications 5 à 8 précédentes, dans lequel
la section de conduite d'aller (28) et/ou la section de conduite de retour (24) reliée fluidiquement au tube de liaison respectif (4, 6) peut/peuvent pivoter autour d'un axe central du tube de liaison (4, 6) afin de modifier une extension du module échangeur de chaleur (38) dans la direction de la largeur (BR), ou dans lequel
la section de conduite d'aller (28) reliée fluidiquement à l'admission (12) de la chambre d'échangeur de chaleur (2) et/ou la section de conduite de retour (24) reliée fluidiquement à l'évacuation (14) de la chambre d'échangeur de chaleur (2) sont/est reliée(s) fluidiquement entre elles de manière rigide.

10. Module échangeur de chaleur (38) selon l'une quelconque des revendications 5 à 9 précédentes, avec plusieurs éléments échangeurs de chaleur (1), dans lequel
l'élément échangeur de chaleur côté aller respectif (1) est relié fluidiquement à l'élément échangeur de chaleur côté retour (RS) respectif (1) par rapport à celui-ci de telle sorte que l'ouverture d'échappement (18) du tube de liaison côté retour (6) de l'élément échangeur de chaleur côté aller (1) est reliée fluidiquement, de manière résistante à la traction et étanche par rapport au fluide échangeur de chaleur, à l'ouverture d'arrivée (8) du tube de liaison côté aller (4) de l'élément échangeur de chaleur côté retour (1) et/ou
dans lequel les éléments d'échangeur de chaleur (1) adjacents les uns aux autres dans la direction de la largeur (BR) peuvent pivoter les uns par rapport aux autres autour d'un axe central des tubes de liaison (4, 6) afin de modifier une extension de l'élément échangeur de chaleur (1) dans la direction de la largeur (BR).

11. Module échangeur de chaleur (38) selon la revendication 10, dans lequel il est prévu sur au moins un élément échangeur de chaleur (1) un serre-flan (34) qui empêche l'élément échangeur de chaleur (1) adjacent de se déplacer à l'encontre de la direction de la gravité (SR).

12. Système échangeur de chaleur (50) composé de plusieurs modules échangeurs de chaleur (38) selon l'une quelconque des revendications 5 à 11 précédentes agencés les uns derrière les autres dans la direction longitudinale (LR), dans lequel une conduite d'aller (42) et une conduite de retour (44) du système échangeur de chaleur (50) sont réalisées au moyen d'une liaison fluidique résistante à la traction et étanche par rapport au fluide échangeur de chaleur des sections de conduite d'aller (28) et des sections de conduite de retour (24) respectivement adjacentes les unes aux autres dans la direction longitudinale (LR).
